# EUROPEAN PATENT SPECIFICATION

(11) **EP 0 723 729 B1**
(45) Date of publication and mention of the grant of the patent: **06.10.2004**
(21) Application number: 95916395.7
(22) Date of filing: 14.04.1995
(51) Int. Cl.: H04N 7/087, H04N 7/08, H04N 7/12, H04N 7/14

(54) **SIMULCAST OF INTERACTIVE SIGNALS WITH A CONVENTIONAL VIDEO SIGNAL**
SIMULTANE ÜBERTRAGUNG INTERAKTIVER SIGNALE MIT EINEM KONVENTIONELLEN VIDEOSIGNAL
DIFFUSION SIMULTANEE DE SIGNAUX INTERACTIFS AVEC UN SIGNAL VIDEO CONVENTIONNEL

(30) Priority: 12.08.1994 US 289499
(43) Date of publication of application: 31.07.1996
(73) Proprietor: ACTV, INC., New York, NY 10020 (US)
(72) Inventor: HARPER, Gregory, W., New York, NY 10022 (US); FREEMAN, Michael, J., Kings Point, NY 11024 (US)
(74) Representative: Glawe. Delfs. Moll
(86) International application number: PCT/US1995/004620
(87) International publication number: WO 1996/005699

(56) References cited:
- WO-A-93/11617
- US-A- 3 008 000
- US-A- 3 936 595
- US-A- 4 305 131
- US-A- 4 333 152
- US-A- 4 422 105
- US-A- 4 847 690
- US-A- 4 847 700

## Description

The present invention relates to a method of receiving a composite interactive signal for display as a television program with interactivity and to a production system for creating the composite interactive signal and a receiver for receiving such a signal.

Interactive television system technologies are currently being introduced into the telecommunications scene. Interactive capability has been developed using one-way systems through the provision of multiple parallel channels of information, related in content to one another. For example US-A-4,264,924 and US-A-4,264,925 each disclose interactive television systems where it is possible to switch among multiple broadcasts or cable channels based on viewer selections in response to interrogatory messages.

These systems have been enhanced to include memory functions using computer logic and memory, where selections of system responses played to the viewer are based on the processing and storage of subscriber responses, as described in US-A-4,507,680.

US-A-4,847,698, US-A-4,847,699 and US-A-4,847,700 each describe a television system providing a common video signal accompanied by several synchronized audio channels to provide content related user selectable responses. The audio signals produce different audio responses. In US-A-4,847,700 these responses are syllable synched to a first audio script and to the video signal (such as to a person or character on the display) providing the perception that the person's or character's mouth movements match the spoken words.

These prior art systems generally provide interactive capability through the use of several parallel related information segments, each segment requiring a separate channel.

The present invention seeks to provide a fully functional interactive program which can be normally received by noninteractive television receivers as a conventional video broadcast and where full interactivity is provided in the same bandwidth as currently required by a standard television signal.

According to a first aspect of the present invention there is provided an interactive program production system for creating a single composite interactive signal for transmission within a conventional television bandwidth to multiple subscribers, the composite interactive signal comprising both a conventional television program and a fully interactive program, the production system comprising: means for storing or receiving at least one conventional video signal comprising standard audio and standard video; means for providing a plurality of audio channels for providing personalised responses to subscriber selections, the audio channels comprising audio segments which are of substantially equal length in time; means for generating graphics data and for creating control data for controlling the use of the audio channels and the graphics data; and means for combining the conventional video signal with the graphics data and the control data to form said single composite interactive signal, wherein said control data includes codes which are embedded in the video signal and which are arranged to initiate and control the play of selected ones of the audio channels and the use of the graphics data.

The single composite interactive signal simulcast is a fully interactive program allowing participation by subscribers through the use of an interactive program box, and yet viewers without the interactive program box can view uninterrupted normal conventional programming. Both programs are provided by reception of the same standard video signal or normal conventional programming. This dual functionality may be provided by any one of several possible bandwidth efficient one-way techniques for sending hidden multiple interactive audio segments, graphics data and programming control data, the reception and processing of which provides a fully interactive experience for subscribers. Increased interactive flexibility is possible through the use of external data storage such as CD ROM which can store additional audio and graphics interactive elements locally. An important feature of embodiments of the invention is that interactivity is offered as an option, without any degradation or interruption in program content to users who choose not to interact or do not have the interactive program box.

The present invention also extends to an interactive system for receiving a composite interactive signal which comprises both a conventional television program and a fully interactive program, wherein the composite interactive signal comprises at least one conventional video signal comprising standard audio and standard video combined with graphics data and control data, and a plurality of audio channels, said control data including codes which are embedded in the video signal, and wherein said interactive system comprises: means for receiving the composite interactive signal; means for extracting the graphics data and the control data from the video signal; demodulator means for demodulating the standard audio and video, and modulation means for applying the video to a display and the audio to an audio output; processor means coupled to the extracting means and responsive to the extracted control data, and an audio switch controllable by said processor means, wherein said processor means is arranged to identify the extracted control data as instructions for the play of a selected audio channel or the use of the graphics data and is arranged either to direct a selected audio channel to the audio switch for application to the audio output, or to cause the use of the graphics data at the initiation of codes of said control data.

An interactive system receiver as defined may be provided as an interactive program box connected to a conventional television set or to computer users by way of a multimedia personal computer (PC) with an RF demodulator board and decoding hardware and software.

In embodiments, alternative audio responses and graphics displays are provided and may be used in response to a current subscriber entry or in response to earlier stored subscriber entries. Personalization of audio can be enhanced through the use of preloaded additional audio response segments in the interactive program box and stacked audio response segments in time. Further enhancement is possible through the use of external data storage devices such as CD ROM for storing interactive audio and graphics elements, increasing the responsive capacities of the system.

Embodiments of the invention do not require that personalized messages be presented immediately after the subscriber has made an answer choice selection. The use of trigger points overcomes the limitation of the question-interactive answer response formats described in the prior art by allowing for specialised attention to be provided to the subscriber at unknown times throughout the program. Interactive audio and graphics can show up anytime during the program as a function of stored subscriber information.

This enhanced interactivity is provided through the use of trigger points spread throughout the program and identifiable by the codes embedded into the video signal. Trigger points provide designated times during the program when the program content is subtly altered to present individual and specialized attention to the particular subscriber viewing the television or computer screen. The trigger points are markers on the program which effectively trigger macros which call for a certain interactive function (e.g. the playing of a personalized audio segment and/or the overlay of a graphics screen) to occur using subscriber selections. These subscriber selections may, for example, have been stored in response to questions presented at the beginning of the program, or retained from a previous program, and/or in combination with a particular pattern of interactions solicited and entered during the program. The interactive program box controller recognizes the trigger points by decoding invisible codes embedded in the conventional video signal. The exact timing of the trigger points are unknown to the subscriber in order to make the interactive elements appear unsolicited to the interactive subscriber. In this manner, the interactive elements are presented in a more subtle and less noticeable fashion than previously.

Meanwhile, subscribers either without the interactive program boxes or with the box but not authorized to receive the particular interactive program continue to receive and hear the standard program audio and view the conventional video without being offered interactive choices and specialized responses. Therefore, both an interactive program and a noninteractive program are being simultaneously transmitted to subscribers.

This high degree of individual participant interactivity is provided to the home television or personal computer through the use of only one standard video signal. A normal television signal has an audio carrier and a video carrier. Standard audio, synchronized to the video presentation, is inserted into the normal audio carrier, thereby maintaining compatibility with any conventional television set.

In embodiments of the invention, unused lines of the video may be used for embedding additional interactive response audio channels and graphics and control data. Alternatively, the interactive audio segments may be provided either serially, one after another, in the audio subcarrier (SAP), or in cable frequency guard bands, and/or prestored in memory at the interactive program box. In addition, even more audio and graphics elements may be provided through the use of external storage devices or game cartridges. In any event, with embodiments of the invention it is inconsequential whether the interactive elements are broadcast synchronously, serially, on separate channels, embedded in the video, transmitted during or before the program or stored in external data storage. Any of these elements, no matter where they come from, may be called up by the interactive box at designated trigger points through the use of logic sent down in embedded codes in the signal. In effect, a normal conventional television program and an interactive program are broadcast simultaneously from a centralized location to a multitude of subscriber homes, some of which are equipped to receive the interactive program while others are not.

The enhanced level of interactivity is provided to interactive subscribers in their homes through the use of interactive program boxes connected to television sets, which receive signals either through cable, direct broadcast satellite, television broadcast, or other transmission means. In the present invention, the programming can be provided in both analog and digital embodiments.

According to a further aspect of the invention there is provided a method of receiving a composite interactive signal for display as a television program with interactivity, wherein the composite interactive signal comprises both a conventional television program and a fully interactive program, and comprises at least one conventional video signal comprising standard audio and standard video combined with graphics data and control data, and plurality of audio channels, said control data including codes which are embedded in the video signal, the method comprising the steps of: receiving the composite interactive signal; extracting the graphics data and the control data from the video signal; demodulating the standard audio and video, and applying the video to a display and the audio to an audio output; identifying extracted control data as instructions to play a selected one of the plurality of audio channels or to use the graphics data, and directing the selected audio channel to the audio output or using the graphics data at a time determined by codes of said control data.

Embodiments of the present invention will hereinafter be described, by way of example, with reference to the accompanying drawings, in which:
Figure 1 is an overview of the operations center, transmission subsystem and home reception subsystem of a system for delivering and receiving interactive programs.
Figure 2 is a time diagram showing a representation of trigger points and corresponding alternative audio segments, one of which is selected for presentation to the subscriber immediately after the execution of a trigger point function.
Figure 3 is a diagram of an embodiment of an interactive programming box for extracting interactive audio segments and data from a conventional video signal where such interactive elements have been embedded into the composite interactive video signal at the operations center.
Figure 4 is a more detailed schematic of the hardware elements of an analog four-channel VBI extractor in an interactive program box as shown in Figure 3.
Figure 5 is a more detailed schematic of an alternative digital embodiment comprising a digital extractor comprising a digital decoder/demultiplexer configuration.
Figure 6 is a diagram of a second embodiment of an interactive programming box for extracting and storing the interactive audio segments from an SAP audio channel in which the interactive audio segments are serially aligned in the SAP channel at the head-end.
Figure 7 is a diagram of a further embodiment of an interactive programming box comprising two tuners, one of which is for tuning to and demodulating the standard video and audio signal and the second of which is for demodulating a secondary analog carrier comprising modulated serial digital audio segments.
Figure 8 is diagram of a further embodiments of an interactive programming box also comprising two tuners but with a digital demultiplexer configuration for demultiplexing the digital audio stream into n parallel digital audio channels, wherein the n parallel digital audio channels are time division multiplexed at the head-end and transmitted as a separate digital audio stream.
Figure 9 is a diagram showing hardware elements of an analog transmission embodiment at the operations center comprising an inserter for embedding four audio circuits and data commands into a single video signal.
Figure 10 is a block diagram showing hardware elements at the operations center of a digital transmission embodiment comprising digital encoder/compressor configurations and a digital multiplexer.

### 1. Introduction

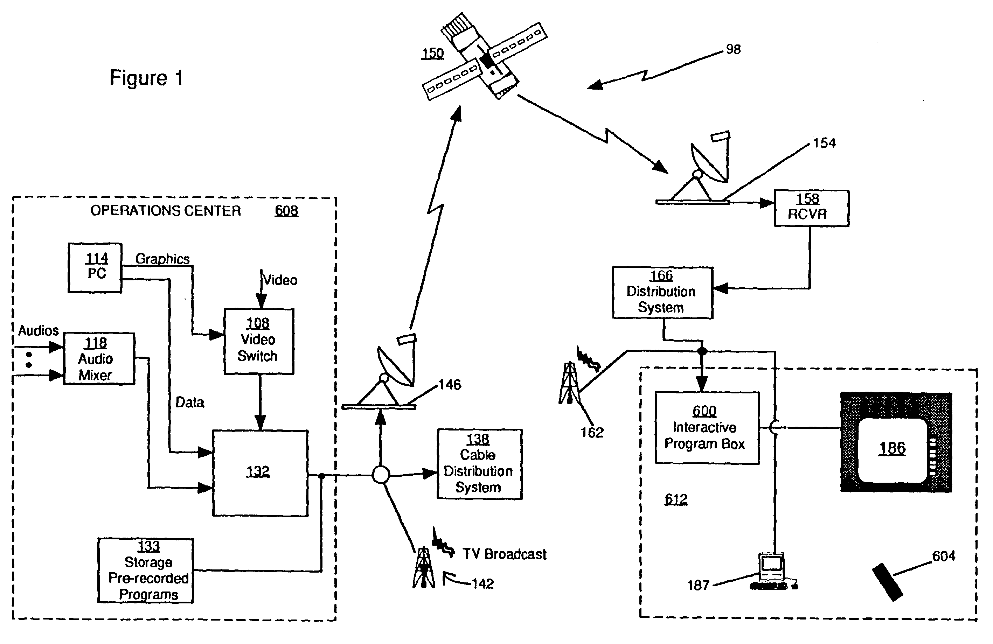

The present invention is a system for simulcasting a fully interactive program allowing subscribers to interact with the program through the use of a remote device (604) and an interactive program box (600) connected to a conventional television set (186) or through the use of a keypad and personal computer (187), with normal conventional programming, viewable by anybody with a regular television set (186) or computer display monitor (187), as shown in Figure 1.

While such interactive programming may include a plurality of video signals, the interactive television programming used herein preferably comprises a single standard video and audio television signal with a plurality of additional audio signals and/or graphics data for providing interactivity. The interaction with the subscribers comes primarily by way of selection of one or more linked audio segments from a plurality of audio segments, whereby the selected audio segment(s) are chosen as a function of previous user responses. Interactivity is enhanced through the use of overlaid graphics displays on the video which like the audio responses, also vary according to selections made by the subscriber on the remote device (604). Audio segments are used to provide personalized responses to subscriber selections. The graphics, on the other hand, are used to both query the subscriber, preferably at the beginning of the program, and also to provide personalized graphical messages to subscribers. The interactive television program also comprises control data for controlling an interactive program box controller (178) at the subscriber home.

Interactivity is further enhanced in the preferred embodiment through the application of trigger points scattered at various predetermined times throughout the program. The trigger points correspond to times when interactive events are scheduled to take place. These interactive events could be the selection and playing of audio segments or the display of graphics. While the choice of particular audio segments or graphics is still dependent on viewer selections, the viewer selections in response to displayed graphical interrogatory messages are preferably made during a period at the onset of the program or when a viewer first tunes into the program. These viewer selections are then utilized as inputs to macros called up at later times during the program by the controller upon the occurrence of the trigger points, identified to the interactive program box by unique codes embedded in the video signal. Alternatively, there can be an immediate response from local storage such as RAM, FLASH or ROM, external data storage such as CD-ROM, from the composite interactive signal or from a series of audio segments that can be collected from both the signal and storage.

### II. System Components

### A. General Overview

As shown in Figure 1, the system uses an interactive program delivery system (98) with any broadcast transmission means including satellite (150), cable (138) or television (142) to deliver the simulcast interactive and conventional program (hereinafter "composite interactive program") from a centralized location, or operations center (608), for distribution to subscribers in their homes. The program may be broadcast live from the operations center (608). For example, live sporting events with added interactive elements can be broadcast from the operations center (608). However, it is more likely with the present invention that the program will be produced off-line and stored in a program storage means (133) at the operations center (608). Likewise, distribution of the signal at the receive end can be by any suitable transmission means (166) including a cable distribution system, fiber optic, microwave, etc. In the preferred embodiment, the system generally includes: an operations center (608) where the composite interactive program is broadcast, the composite interactive program comprising a single video signal, a plurality of audio channels, graphics and control codes; a broadcast transmission system comprising transmission equipment for transmitting the interactive video signal by any suitable broadcast transmission means and receive equipment for distribution to the remote home locations; and at the subscriber home; an interactive program box (600) for processing the signals and providing for the interactivity; a remote device (604) for transmitting to the interactive program box (600) subscriber selections; and a standard television set (186). Alternatively, the interactive program signal can be received, processed and displayed by way of a multimedia personal computer (187) comprising an RF demodulator board, an extractor board, and keypad.

A major aspect of this invention is the individualization of audio response to subscribers in the home. Each participant receives personalized audio responses based on one or more selections on a remote (604) keypad. Since the system can remember earlier subscriber selections, the subscriber selections may be input and stored in memory at the beginning of the program and used later by the interactive program box (600) in formulating an interactive response. The audio response is normally a prepared prerecorded audio response comprising one or more audio segments. In the present invention, not only do the audio responses provide interactivity, but the graphics displays also can vary as a function of previous user selections thus generating more individualization of the program.

At the remote sites, participants interact with the interactive program either via a subscriber interface (604) or computer keypad. Preferably, the subscriber interface (604) is an Infrared (IR) datalink remote device with a keypad or if the interactive program is received by a personal computer (187), a PC keypad. Depressing a button on the keypad (604) provides input to the interactive program box processor (178) which can either immediately or later be used by the controller to trigger unique algorithmic codes to produce a unique and individual message from a plurality of transmitted audio segments and/or those prestored at the interactive program box (600). The response can be directed to the subscriber's current answer selection to an interrogatory message displayed on the screen, or may be based on earlier entered subscriber selections through the provision of memory and logic in the system and trigger points, as described below.

Multiple audio segments forming the set of suitable responses to an interrogatory message are preferably sent as part of a standard video signal. There are a number of different ways to effectively forward the necessary audio segments for a given interactive event to the interactive program box (600). Different embodiments for delivering these audio segments include digital and analog transmission embodiments including serial or parallel paths, as described below. The interactive elements may be broadcast synchronously (alternative responses aligned in time), serially, on separate channels, embedded in the existing video and/or transmitted before or during the program. Audio segments tagged for a given interactive event, can be sent to the interactive program boxes (600) much earlier than the scheduled event during the program, in which case the segments are preferably stored in temporary memory, or the segments can be transmitted concurrently with the event. With the present invention, it makes no difference how the audio segments reach the interactive program box (600) as long as they are available for selection at the box (600) at the predetermined trigger points. For example, the audio segments could also be stored in local external data storage (629) such as CD-ROM.

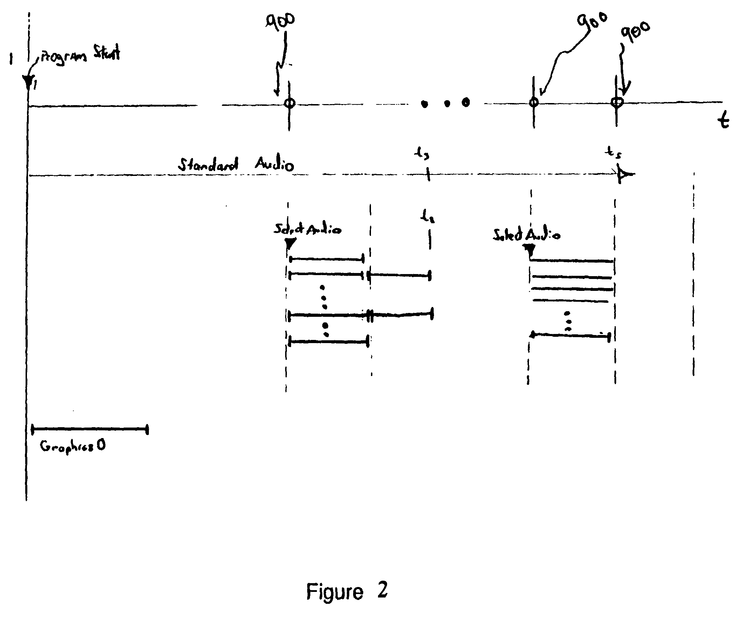

In the preferred embodiment, interactive events occur at scheduled predetermined trigger points (900), as shown in figure 2. These points (900) correspond to the times when the conventional program content can be altered and personalized for those subscribers capable of receiving the interactive signal. The programmer can place the trigger points (900) at any time throughout the program. Since the trigger points (900) are unknown to the subscriber, the subscriber does not know when they will receive a personalized message. In other words, an interactive response can either immediately follow a corresponding user selection made to an interrogatory message or occur at a later time corresponding to a trigger point (900), or any combination of the two. Of course, timing of the interactive events should correspond to suitable times in the program where branching to interactive elements is sensible and does not clash with the program content of the conventional video still displayed on the television (186) or other display monitor.

As shown in figure 2, at the onset of a trigger point (900), the controller will select one of several possible audio (or graphic display) responses for presentation to the subscriber. As mentioned above and shown in figure 2, some of the audio responses may comprise the linking of two or more audio segments.

In combination with the use of trigger points (900), the present invention allows for the viewer to select certain options at the onset of the program to suit the viewers' preferences. For example, if the program broadcast is a live sports event, at an early trigger point (900), the viewer could be queried as to whether the viewer would prefer to receive audio in English, Spanish, French, or perhaps hear the local announcer instead of the network announcer. Upon the viewer selection, the controller branches to the appropriate channel.

Each trigger point (900) is identified preferably through the broadcast of codes sent as part of the composite interactive program signal. The codes preferably include, at a minimum, the following information: (1) header identifying the occurrence of a trigger point; (2) function ID (e.g., selection of audio responses or graphics responses.etc.); and (3) corresponding interrogatory message(s). The first bit sequence simply identifies to the controller (178) that a trigger point is about to occur. The function ID designates the macro or other set of executable instructions for the controller (178) to read and interpret to obtain the desired result. e.g., a selected audio response. Alternatively, the data codes could include the actual algorithmic function for the controller (178) to apply.

Upon extraction of the codes by the extractor (174), the controller (178) reads and interprets the codes and calls from memory (282, 286) either a stored message for display on the screen or a particular user selection(s) designated by the trigger point codes. The user selections correspond to subscriber answers to a series of interrogatory messages preferably presented at the beginning of the program. After obtaining the appropriate user selection(s), the controller (178) reads and performs the executable instructions using the user selection(s) as input(s) in the macro algorithm. The result of the algorithm is either a selected audio response and/or selected graphics response. The audio response can be called from memory if it is prestored, called from external data storage (629), or the controller (178) can command the switch (620) to branch to the particular audio channel if the response is broadcast concurrently with the trigger point. After the selected audio response is played to the subscriber, the switch (620) branches back to the standard audio, shown at time tₛ in figure 2.

As mentioned above, a series of interrogatory messages are preferably presented when the subscriber begins watching the interactive program. These interrogatory messages can be presented in any one of three ways. First, the interrogatory messages can be presented as graphics displays overlaid by the interactive program box (600) onto the conventional video signal, wherein the graphics data is sent in the vertical blanking interval of the composite interactive signal. Second, the interrogatory messages are presented as graphics displays as discussed above, except the graphics data comes from local storage such as RAM (282) or FLASH ROM (286), external data storage (629) (e.g., CD ROM, cartridge, etc.), or a combination of data in the VBI and data called from either local (284) or external data storage (629). Third, graphics data can be presented in the form of user templates stored at the interactive program box (600).

User selections corresponding to answers to the n successive interrogatory messages are received by the remote interface (628) at the beginning of the show, stored in memory and used throughout the show at the appropriate trigger points to subtlely change program content as the show progresses. Preferably, each interrogatory has a set of possible answers. Next to each possible answer will be some identifier corresponding to a label on a key on the subscribers remote (604). The subscriber depresses the key corresponding to their answer selection. This selection is decoded by the remote interface (628) and controller (178) , stored in memory (282, 286), preferably RAM (282), and used later as required by an algorithm designated at a trigger point.

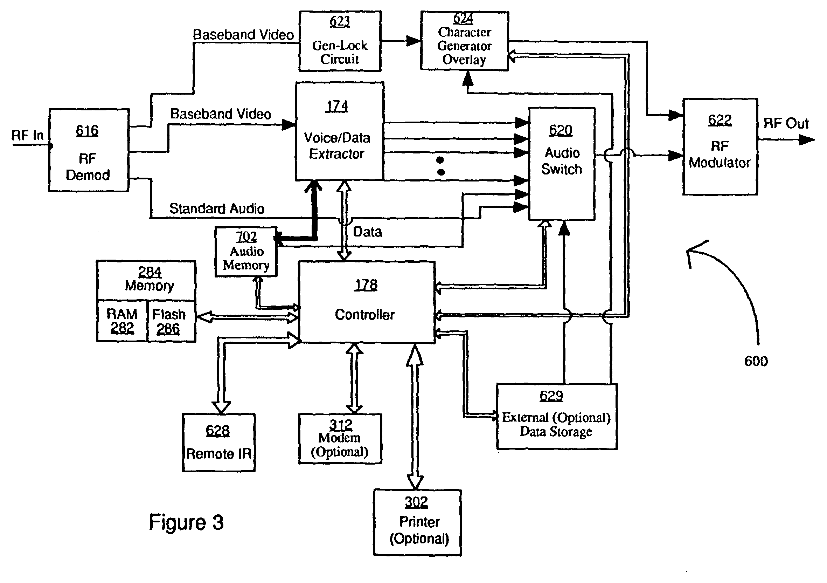

Graphics can be overlaid onto the video at the subscriber site through the use of a character generator (624), as shown in figures 3 and 6-8. The character generator (624) is essentially an on screen display chip. After embedding the graphics codes into the program video signal, the microprocessor (178) interprets the codes and maps the codes into the actual bit maps, representing the characters, stored in memory (282, 286). The interactive program box processor (178) then commands the character generator (624) to overlay a particular character designation at a particular point in the screen.

Alternatively, graphics video can be sent from the operations center (608). The graphics video can be created and output from a personal computer (114) to a video mixer (108).

Referring to figure 1, additional inputs to the video mixer (108) may include the conventional video from either live cameras or VCR The video mixer (108) outputs a single video signal by switching between the graphics video and program video at appropriate times.

A plurality of graphics overlays, each of which preferably comprises an interrogatory message and which are chosen as a function of previous subscriber selections in response to previous interrogatories, can be provided. The method by which a graphics message is chosen is substantially the same as the method used to select audio responses. The graphics overlays can be selected as interactive responses at trigger points as explained in the preceding paragraphs. As with the audio responses, one of several possible graphics overlays can be presented during any given time interval. The graphics message chosen is also based on the subscriber selections to displayed interrogatory messages at the beginning of the program. The subscriber selections are called by the interactive program box processor (178) which examines these inputs according to algorithmic codes to produce the next graphics interrogatory message.

The one-way interactive system also has the advantage of remembering subscriber responses and using these responses in choosing an audio response, and/or graphics interrogatory message, to present to the subscriber. Memory branching is a technique of the present invention where the algorithm assembles audio responses and graphics interrogatory messages according to the current and previous user inputs. Memory branching is accomplished by linking audio message segments or successive graphics interrogatory messages together in a logical relationship. In this scheme, the interactive program box processor (178) contains logic (preferably, in the software algorithm) and memory (284) to store previous subscriber selections and to process these previous responses in the algorithm to control future audio channel selection, as well as future graphics message selection.

### B. The Interactive Program Box

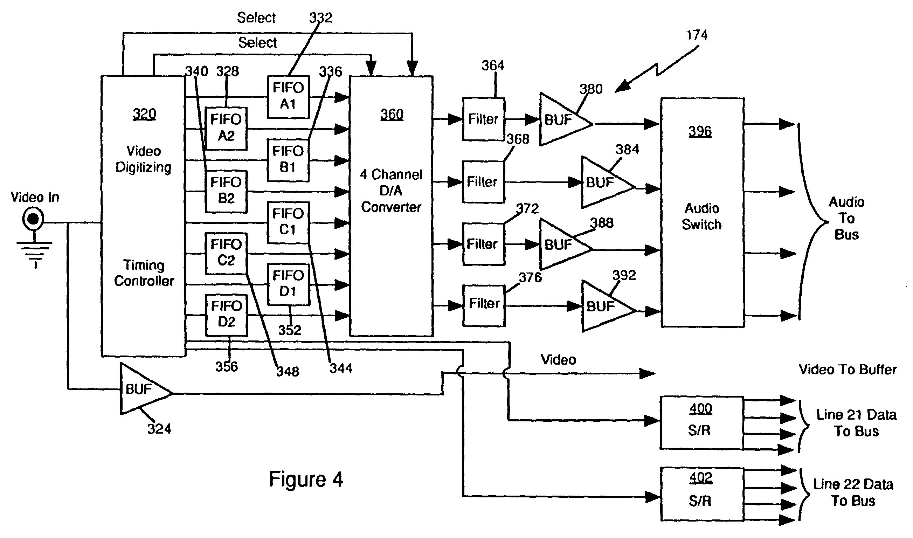

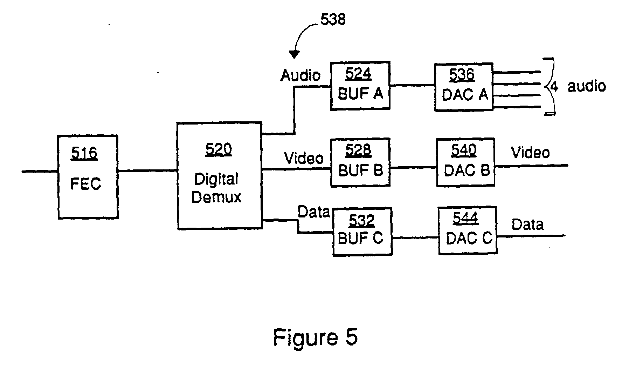

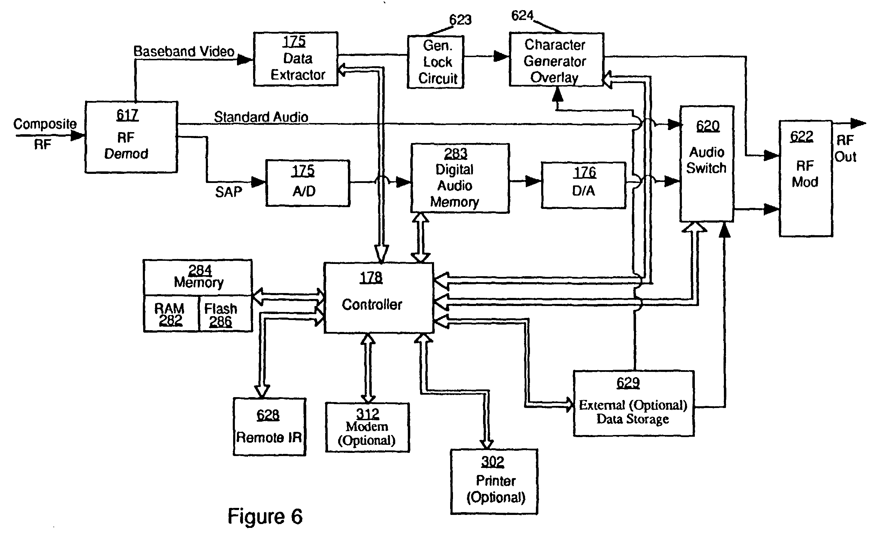

Figure 3 shows an overview of a preferred interactive program box (600). Figures 4 and 5 show analog and digital embodiments of the audio/data extractor (174), a component shown in figure 3. Alternative embodiments of the interactive program box (600) are shown in figures 6-8. The embodiments represent different apparatus for receiving, processing and storing the alternative interactive audio segments which are received in different transmission formats. With these embodiments, the interactive systems are no longer solely limited to selecting audio from multiple parallel tracks of audio, related in time and content, nor is the interactive questions-immediate answer format, as disclosed in previous patents, necessary. Of course, the systems of the present invention can still use the question-immediate answer format or a combination of such format and delayed response via trigger points. The concept remains the same, i.e., to select audio responses which are matched to user selections by some function. However, the current invention, as supported by the disclosed embodiments, goes farther to enhance interactivity by providing the interactive elements at times unknown to the viewer.

The interactive program box (600) is a portion of the system that can reside in the home of the subscriber or elsewhere, such as at a cable headend, as described below. If at the home, the interactive program box (600) is usually located near the subscribers' television (186), but it may be placed anywhere within the range of the subscribers remote handset (604). As shown in Figure 3, the preferred interactive program box (600) comprises an RF demodulator (616), comprising video and analog demodulators, an audio switch (620), voice/data extractor (174), modem (312), audio memory (702) a controller (178) with associated memory (284), Gen-lock circuit (623), character generator (624), an RF modulator (622) and an infrared interface (628) for the subscriber remotes (604). An external data storage device (629) and printer (302) are optional.

Alternatively, the elements of the interactive program box (600) can be incorporated and provided by a conventional multi-media personal computer (187). Preferably, this computer preferably comprises a video demodulator board, a keypad for entering subscriber selections instead of a remote IR device (604), an extractor board for separating the audio signals and data from the conventional video signal, temporary and permanent data storage, a modem (optional), audio switch and a processor. Operation of the interactive program system using a personal computer (187) is substantially identical to that of the interactive program box (600)/television set (186) combination described below.

In addition, although the interactive program box (600) is most likely to be located in the home, there is no reason why the interactive program box (600), or a functional substitute (comprising a processor, extractor, memory, audio switch, RF demodulator, etc.), could not reside at an location external to the home, such as at a cable headend. If the interactive program box (600) is located at the headend, the interactive program box (600), or equivalent, could receive user selections from the home via a wireless RF link, telephone line, cable, etc. Once user selections are received, selection of the audio and graphics signals at the cable headend occurs in identical fashion as if the interactive program box (600) were located in the home, as described below. The path to and from the cable headend can be seen as simply an extension of the cable between the interactive program box (600) and the television set (186). The only possible distinction is that one interactive program box (600) located at the headend may be programmed to service several subscriber homes effectively using a time sharing box among many users.

In a preferred embodiment, the plurality of audio signals are combined with the single video signal along with interactive data and graphics codes in an inserter (130) at the operations center to form a single NTSC compatible video signal. These signals may be analog or digital, as described below.

Referring to a preferred embodiment shown in figure 3, the composite interactive signal is received by the interactive program box (600) either via cable connection, if the signal is transmitted over cable, by way of satellite antenna hook-up for receiving satellite broadcasts, or by way of a television antenna if the signal is broadcast. The composite interactive signal is input into an RF demodulator (616). In the standard television mode with no interactivity, the RF demodulator (616) simply demodulates the conventional video and audio signal and outputs the standard audio which passes through the audio switch (620) to the television set (186). The video is forwarded to an RF modulator (622) for presentation on the television or computer screen. Therefore, in the standard mode the interactive program box (600) is simply a pass-through box. The voice/data extractor (174) and audio switch (620) are completely bypassed in this embodiment.

In the interactive mode, the video demodulator (616) outputs the standard video signal which is transported to a Gen-lock circuit (623) and character generator (624) as wells as to a voice/data extractor (174). At the output of the Gen-Lock circuit (623) and character generator (624), the video is forwarded via the RF modulator (622) to the television (186) or computer display monitor. The processor (178) preferably controls an n X 1 switch (620), the output of which is an appropriate audio segment to be sent to the television set (186) for presentation to the subscriber. Of course, the switch could have more than one output, in which case more than one viewer can watch the video on the same monitor and each receives individualized audio response through the use of headphones. The processor (178) sends a command to the audio switch (620) to disconnect the standard audio at the beginning of an interactive segment. The extractor (174) essentially reverses the process by which the audio and data signals were inserted into the video signal. As explained below, the voice/data extractor (174) removes the additional audio segments and data that are hidden in the standard video signal. The data is forwarded to the microprocessor (178) and the audio segments get sent either to an audio switch (620) or to temporary memory (202) depending on where the instructions teach the segments to be forwarded, all of which occurs under the control of the microprocessor (178). The microprocessor (178) reads and interprets the instructions either broadcast in the data codes or resident in the operating software at the interactive program box (600).

The microprocessor (178) interprets the extracted data as either control data, including instructions for switching between voice channels, or graphics data for on screen display. If the data is on-screen display data, the data is preferably prefixed by a command designating the data as on-screen display data, as opposed to control data. In the preferred embodiment, the controller (178) also examines the control data for the occurrence of a header code designating the onset of a trigger point in the program.

If the trigger point codes designate a macro which calls for the placement of a graphics display on the video, the microprocessor (178) reads the codes, accepts any graphics data sent from the head-end (608), calls for and examines the actual bit maps stored in memory (284) or external memory (629) and designating the identity of the characters, and then commands the character generator (624) to overlay particular characters at particular points on the screen. Therefore, the graphics are preferably generated locally with the bit maps stored in memory (284). The graphics are selected for presentation either in predetermined sequence, through the use of control codes in the composite interactive program, developed when the program was created at the operations center (608), or more flexibly through the execution of algorithms by the processor (178) utilizing stored subscriber selections to previous graphic interrogatory messages. The algorithms are preferably part of the operating systems software stored in memory at the interactive program box (600). Alternatively, the algorithms could be included in the data portion of the composite interactive signal.

The graphics can be utilized to overlay any portion of the screen of the television screen. The character generator (624) is locked by a Gen-lock circuit (623) which allows for the synchronous placement of the graphics on the video. The character generator (624) is preferably a standard on-screen display chip which takes incoming video, locks the video and superimposes on the video the characters as instructed by the microprocessor (178). Specifically, the character generator (624) is a switching system which takes the active lines of video and switches to a mode of sending the graphics characters for a predetermined time, and then switches back to the video when the character is finished being written on the screen.

Because the graphics are generated locally, subscribers without the interactive program box (600) are not be able to view the graphics. For those subscribers possessing the interactive capability, the graphics can be used for both posing interrogatory questions to subscribers at the onset of the program, consistent with the trigger point embodiment, posing questions during the program, or used to provide a personalized response to previous individual subscriber selections.

Preferably at the beginning of the program or when a viewer first tunes in, a series of interrogatory messages are presented to the subscriber. The subscriber responds to the interrogatory message by depressing a button on a remote (604) or computer keypad corresponding to an answer selection listed on the interrogatory graphics screen. If the subscriber has made a selection using a remote (604), a signal is received by the IR interface (628) which processes the signal and forwards the signal to the processor (178). The processor (178) preferably creates a packet comprising the user selection and a header code that identifies the particular interrogatory message associated with user selection and sends the packet to memory (284). Each user selection to each interrogatory is stored in this fashion. These selections will be called later in the program at appropriate times when identified by the trigger point codes and then used in macros or algorithms to determine interactive audio and/or graphics responses.

The presentation of the graphics interrogatory messages can also be made a function of subscriber selections to previous interrogatory messages. The logic used in the codes for selecting the next graphics message is similar to that used for selecting audio messages. One method, as disclosed in earlier ACTV patents, is the "decision tree" logic methodology. The subscriber makes a selection to a first predetermined interrogatory graphics message. After the subscriber hears an appropriately branched audio channel, the processor (178) will interpret graphics algorithmic codes sent down from the operations center (608) and will read from memory (284) an appropriate next graphics message. The processor (178) then directs the character generator (624) to overlay the selected graphics message onto the next frames of video.

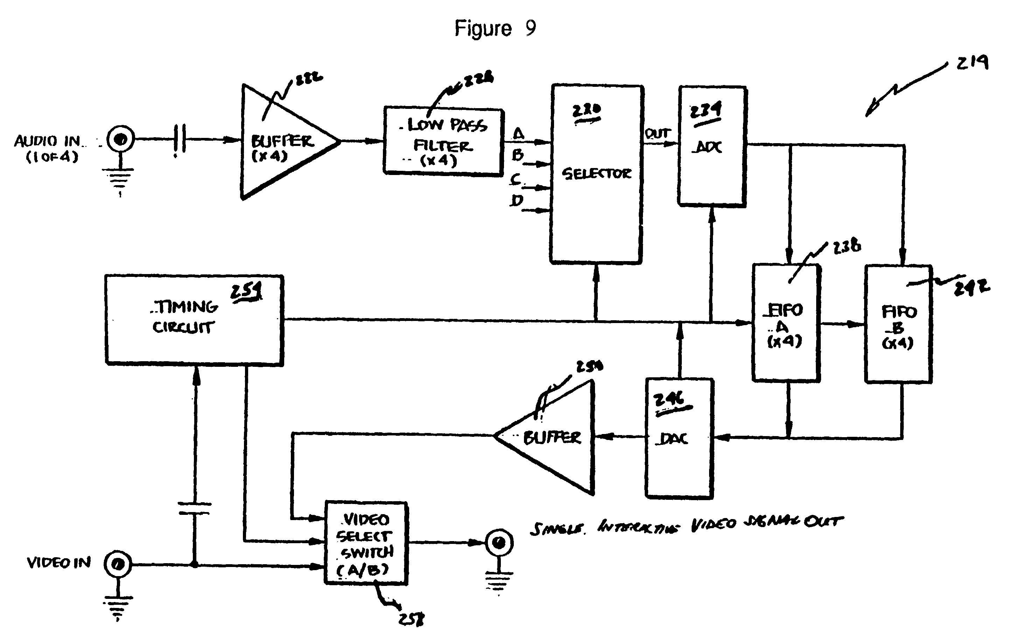

The voice/data extractor (174) of the preferred embodiment shown in figure 3 is shown in more detail in figure 4. This particular extractor corresponds to the Pulse Amplitude Modulation (PAM) inserter (219) discussed below in connection with Figure 9. The audio and data is stripped out of the baseband signal in the four-channel VBI extractor (174). The signal separator (174) essentially reverses the process by which the audio and data signals were inserted into the video signal. A video digitizing system and timing controller (320) digitize the incoming video signal at the same sampling rate at which the PAM audio samples are inserted into the video signal. Alternatively, if a digital adaptive pulse code modulation (ADPCM) extractor, corresponding to an ADPCM inserter described below, is used in the interactive system, the extractor does not include the video digitizing and buffer circuitry shown in Figure 4.

The timing controller (320), shown in Figure 4, determines which lines of video contain the audio signals and separates the compressed audio signals by directing each audio channel into an associated FIFO pair (328-356). As with the insertion circuit, the FIFO's in the FIFO pairs (328-356) are used alternately so that while one FIFO is reading the audio data, the other is writing data. The digital-to-analog (D/A) converter (360) sequentially reads from the FIFO for each channel which is in the write mode and converts the digital signal for that channel into an audio signal. The analog output for each channel is filtered by filters (364-376) and directed to buffers (380-392). The buffers (380-392) preferably adjust and amplify the analog output signals to -IV to +IV range. The four output audio signals correspond with the four audio input channels.

As shown in Figure 4, the line 21 data is read into 8-bit shift registers (400) wherein the 16 bits of serial data are converted to two bytes of data. The line 22 data is read by 8-bit shift registers (402) and the 16 bits of serial data are also converted to two bytes of data.

The line 21 and 22 data (i.e., the data codes) are directed from the extractor (174) into the microprocessor (178). The microprocessor (178) decodes the data and stores it in either RAM (282) or ROM (286).

In an alternative voice/data digital extractor embodiment at the receive end, the composite digital signal is received where the FEC code is applied by an FEC decoder (516), as shown in Figure 5. The resulting signal is applied to a digital demultiplexer (520) where the audio, data and video components are separated and individually buffered in a set of buffers (524-532). From buffer A (524), the composite digital audio signal enters a digital-to-analog converter (536) where the plurality of audio signals (including the standard audio channel and the additional audio channels) are separated, decoded and decompressed to recreate each individual analog audio channel. From buffer B, the digital video signal similarly enters a digital-to-analog converter (540) where the signal is decompressed and decoded to form an analog video signal. The data is similarly decompressed and decoded in analog-to digital decoder C (544).

Referring back to figure 3, the processor (178) receives data from the extractor (174), stores data and reads instructions from memory such as temporary RAM (282) memory, ROM or FLASH ROM (286) memory, and receives response data from the remotes (604) via an infrared interface (262), or alternatively a computer keyboard. Optionally, the processor (178) can interface to a printer (302) via a printer port (302) for printing out coupon codes, as discussed below. The processor (178) is preferably a 80C188 based microcontroller, but can be any similar controller. As mentioned above, this entire system could be built into a personal computer using a standard off the shelf multimedia personal computer (187) with preferably an 80386 or higher based processor.

The operating system software for the processor (178) is preferably stored in FLASH ROM memory (286). The FLASH memory (286), as shown in Figure 4, also preferably stores new instructions to use with reprogrammable software. It works in conjunction with RAM (282). The RAM (282) can also be used as an interface to a print buffer. The print buffer is used so that data transmissions to the site can be buffered, error corrected and formatted for printing. The site controller (178) is preferably connected to a printer via a parallel printer port. The controller (178) sends coupons to the printer (302).

The interactive program box (600) connects with the remotes (604) preferably by infrared (IR) connection. The processor (178) preferably stores the setup commands and interactive branching commands and algorithms in associated memory, as described below. In the present invention, code interpretation and switching is preferably accomplished by the interactive program box processor (178). The processor (178) collects subscriber responses from the remotes (604), or computer keypad.

The advantages discussed above in relation to presenting an interactive program using trigger points are obtainable in each of the interactive program box embodiments shown in figures 6-8. In the embodiment shown in figure 6, alternative audio segments are preferably sent serially from the operations center (608) in the SAP channel. The demodulator (617) receives a composite interactive signal comprising the standard video and standard audio signal along with an audio subcarrier. The demodulator (617) breaks the signal into it's component parts, forwarding the baseband video to a data extractor (175) and the standard audio to an audio switch (620). The line 21 data extractor (175) takes out the data codes, including the trigger points.

The SAP channel comprises a plurality of audio segments lined up serially. The audio segments are digitized in the analog to digital converter (175) and are preferably stored in digital audio memory (283). At certain times during the program, data codes will designate a trigger point and key the microprocessor (178) to select and play an audio segment corresponding to previous user input(s), according to the process described above. The microprocessor (178) calls the appropriate audio segment(s) from internal memory or external data storage (629) and commands the audio switch to pass the selected audio segment to the RF modulator (622) for play to the subscriber. At the end of the interactive time period, the controller (178) instructs the audio switch (620) to again pick up the standard audio.

In an alternative embodiment similar to that as shown in Figure 6 and discussed above, the simple addition of a second tuner, receiving the composite RF signal, could be used to tune to a second audio channel for collection of transmitted audio segments. The tuner would pass the audio segments to the A/D converter (175) with the operation of the rest of the interactive program box (600) similar to that described above in connection with Figure 6.

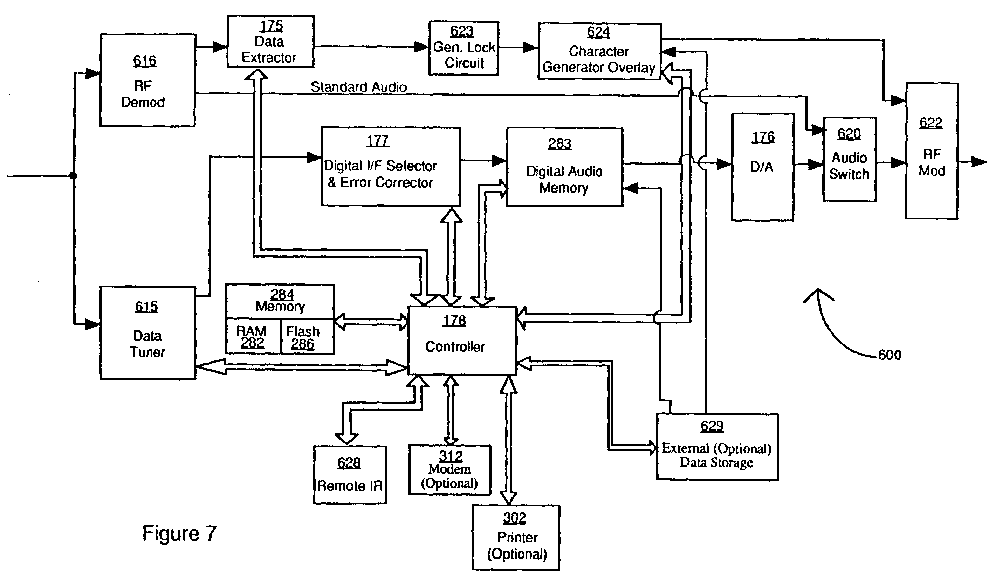

Figure 7 shows another interactive program box (600) embodiment for providing alternative audio and graphics segments. This embodiment uses two tuners: an RF demodulator (616) and a data tuner (615). The RF demodulator (616) tunes to and demodulates the conventional video and audio signal in the standard video bandwidth. The data tuner (615) receives a single digital audio signal. The signal comprises digital serial audio segments modulated onto an analog carrier. The data tuner (615) demodulates the signal into digital audio. The digital interface selector and error corrector (177) separates the audio segments and performs error correction according to any error correction scheme commonly understood in the art. The controller (178) directs the selector (177) to extract selected digital audio segments from the serial digital stream and send them to the digital audio memory (283). Selection of one or more audio segments for play as personalized messages on the television set (186) occurs according to the processes described above. After the controller commands the memory (283) to forward a digital audio segment, the segment is converted to analog by the digital to audio converter (176) and is subsequently passed to the RF modulator (622) for play on the television set (186).

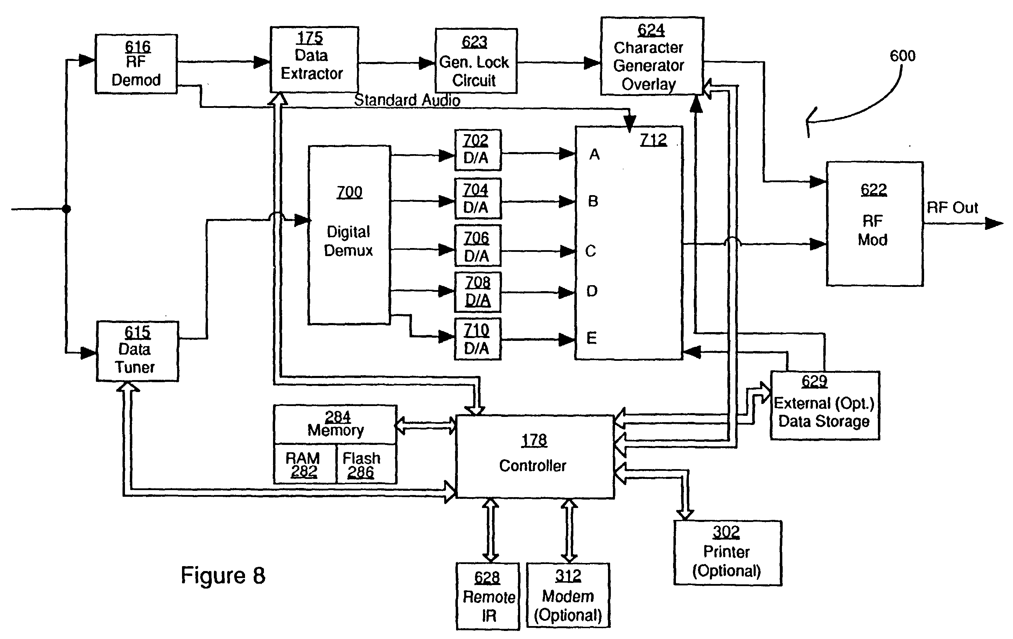

Another interactive program box (600) embodiment for receiving, storing and selecting alternative audio segments is shown in figure 8. At the operations center (608), the audio segments are digitized, time division multiplexed, modulated and converted to frequencies in unused channel frequency space in the cable television spectrum, e.g., cable guard bands.

The RF demodulator (616) again demodulates the conventional video and audio signal. The data extractor (175) receives the signal and extracts the VBI line 21 data codes. The data in the VBI indicates the frequency channels in which the digital audio segments are transmitted. For example, audio messages A-E are located in between channels 14 and 15. The controller (178) instructs the data tuner (615) to tune to that part of the spectrum between channels 14 and 15. Alternatively, an autotune capability can be used to find the audio channels in the spectrum.

The tuner (615) demodulates the digital audio signal and forwards the signal to the digital demultiplexer (700). The demultiplexer (700) demultiplexes the signal into n digital audio channels and forwards each channel to a separate D/A converter (702-710) where each of the digital channels are converted to analog audio. As described above, one of these channels can be selected as identified at the trigger points for play over the audio speaker to the subscriber. All of the other components in Figure 8 operate identically to that previously described in connection with figure 3 to provide interactive or conventional programming to the subscriber in the home.

The embodiments described above and shown in connection with figures 3-8 relate to different ways of receiving broadcast audio segments. Alternatively, interactive audio segments, or graphics elements, could be prestored on cartridge, CD ROM or even floppy disk. However, the trigger points are preferably broadcast as data codes embedded in the conventional video signal and will work with any of the embodiments described above.

In this manner, each subscriber at different homes hears a different and personalized response from their own television set (186) due to their interaction with the interactive program box (600). As discussed below, the power of this system can be increased exponentially via preloading of additional audio segments expanding personalized delivery and the mechanism of memory branching wherein the system actually remembers and uses the subscriber's earlier selections to present or compose unique messages to the subscriber.

The range of possible audio responses can be dramatically increased by preloading audio segments. First, more than simply the audio response segments broadcast along with a trigger point can be transmitted by preloading the memory at the interactive program box (600). Preloading can be accomplished by sending additional audio segments in a time period prior to that period in which the normal broadcast audio responses are sent.

For example, at the beginning of a program several audio segments can be broadcast to the interactive program boxes (600) by any of the methods and systems described in connection with figures 3-8. The controller (178) directs that these segments be stored in memory. Each audio segment has a pointer which identifies the particular interrogatory message corresponding to an audio segment. For example, if the interrogatory message presented early in the program was the following, "Are you a boy or a girl," an audio segment which might correspond to this question is "Oh, I see, you are a boy." At the time of the interactive element, identified to the controller by the trigger point codes, preferably more audio responses associated with the earlier presented interrogatory message are output from the operations center (608), passed through an audio mixer (118), embedded in the video signal at the inserter (130) and transmitted to the remote sites. Once received at the interactive program box (600), the audio responses are extracted from the video signal and forwarded to the switch (620). The controller (178) then either selects an audio response made of prestored audio segments in memory or one of the audio segments broadcast with the trigger point codes. The switch (620) branches to the appropriate channel to forward either one of the segments from memory or one of the recently broadcast segments. At the end of the interactive period, the switch (620) branches back to the standard audio.

Even more enhanced and flexible operation can occur through the addition of external data storage (629), such as CD ROM or cartridge. For example, sports statistics or other information on athletes or others can be stored in CD ROM. During live sports event either audio segments or graphics displays focusing on the athlete can be called by the processor (178) and presented to the viewer as a function of user selection of an option or at a trigger point if the user indicated during queries at the beginning of the live event that they were interested in a particular player.

In the present invention, the interactive audio branching is preferably performed in the interactive program box (600). The branching algorithm, preferably defined by a series of branch codes, can be inserted as part of the program. The processor (178) stores the algorithm in associated RAM memory (282). The algorithm determines the proper channel to switch to as a function of the subscriber selection.

The branching algorithm can be expanded by utilizing previous user selections in making a decision on a current audio segment. This is the memory branching embodiment. In other words, previous user responses, stored in RAM memory (282) in the interactive program box (600), are used as input to a logic network, or algorithm. Successive audio output segments can be related in a "decision-tree" type relationship. The logic network, or algorithm, processes the data input for selection of an audio output response message. This memory embodiment goes well with the expanded audio response capability described above.

The memory branching technique, described above, can work similarly for basing successive graphics interrogatory messages on previous subscriber selections to earlier graphics interrogatory messages.

Another embodiment uses "stacking" to increase the audio answer response options. The expansion is due to linking separate audio segments separated in time to form a greater number of answer responses. The following example illustrates the use of stacking as well as memory branching, described above. The left hand column of the example shows the interactions between the program and the subscriber. The right hand column shows the logic applied and branching performed in the interactive program box (600).

| TYPE OF INTERACTION | ACTION TO BE PERFORMED |
|---|---|
| 1. Can you tell time? | • Store button pressed in memory A |
| (1) YES | • If button=1, go to track 1 |
| (2) | • If button=2, go to track 3 |
| (3) | • If button=3, go to track 3 |
| (4) NO | • If button=4, go to track 2 |
| | • If no button pressed, go to track 3 |
| | |
| RETURN FROM BRANCH | GO TO TRACK 1 |
| | |
| 2. What time is it? | • Store button pressed in memory B |
| (1) 2:30 | • If button=1, go to track 1 |
| (2) 3:30 | • If button=2, go to track 2 |
| (3) 3:50 | **•** If button=3, go to track 3 |
| (4) 4:00 | • If button=4, go to track 4 |
| | • If no button pressed, go to track 4 |
| NOTE: 3:30 (button (2)) is the correct answer. | |
| | |
| Recall response from question 1 | • Recall memory A and branch as follows: |
| TRACK 1: "You said you know | • If memory A=1, go to track 1 |
| how to tell time ..." | |
| TRACK 2: "You said you don't | **•** If memory A=4, go to track 2 |
| know how to tell time ..." | |
| TRACK 3: "You didn't indicate if | • If memory A=2 or 3, go to track 3 |
| you can tell time ..." | |
| | |
| Memory branch | • Branch as follows: |
| | |
| TRACK 1: "... and you weren't | **•** If memory A=1 and memory B=2 |
| kidding. Great Work!" | (correct) go to track 1 |
| TRACK 2: "... but you sure learned | • If memory A≠1 and memory B=2 |
| fast. That's great." | (correct) go to track 2 |
| TRACK 3: "... and with more work, | • If memory A=1 and memory B=1, 3 |
| you will learn more." | or 4 (incorrect) go to track 3 |
| TRACK 4: "... but with more work, | • If memory A≠1 and memory B=1, 3 |
| you will learn more." | or 4 (incorrect) go to track 4 |
| | |
| RETURN FROM BRANCH | GO TO TRACK 1 |

Stacking is evident in the above example by the increased number of optional audio messages formed by linking the later two branches indicated in the example above. The possible branch combinations are provided, as follows:
Branch #1 to Branch #1
Branch #2 to Branch #2
Branch #3 to Branch #2
Branch #1 to Branch #3
Branch #2 to Branch #4
Branch #3 to Branch #4
Therefore, the present invention covers numerous methods for increasing the interactive audio response capabilities.

### C. Subscriber Interface

Each subscriber interacts with the system via a subscriber interface (or "remote") (604) or a computer keyboard.

The keypad (604) preferably comprises a number of functional keys. The keypad (604) preferably comprises keys labelled 0-10, "YES" and "NO" labelled keys, and "TRUE" and "FALSE" labelled keys can be accommodated by the present invention. The invention can also accommodate an LCD panel for receiving messages and confirming answers. Similar functions can be assigned to computer keyboard keys.

Addressability and authorization occur preferably using techniques well known in the cable industry. For example, program selection and authorization can occur using menus on the screen with cursor overlays. Through the menu system, a viewer can access a program by inserting a unique ID code, billing number, etc. Macro access algorithms stored in memory in the interactive program box enable entry.

Either at the beginning of the interactive program, as in the preferred embodiment, or alternatively as the program progresses, the subscribers are requested to enter responses via the keypad (604) or computer keyboard. These requests are preferably displayed on the TV monitor (186) or computer screen through the use of graphics overlays. The interactive programming preferably consists of graphics interrogatory messages with correct and incorrect answers overlaid on the video.

The keypad (604) or computer keyboard allows the subscriber to interface with the interactive programming by depressing keys corresponding to answers of an interrogatory message. For example, in a multiple-choice question mode, each participant selects a keypad button corresponding to his or her choice. These selections are preferably stored and later used by the controller (178) in selecting either an audio or graphics message and either directing the audio switch (620) to switch from the standard audio channel to an alternative audio channel for passing the respective audio segments to the television (186) or to direct the graphics character generator (624) to overlay graphics characters over predetermined portions of the screen. The user selection is mapped into one or the plurality of audio responses, comprising one or a combination of linked audio segments, or one of a plurality of graphics messages after the user selection is applied to a some functional algorithm.

### D. Program Preparation

For the present invention, it is anticipated that the majority of the interactive programs will be produced off-line and thereafter recorded for subsequent broadcast on some storage medium at a central location. Alternatively, live programs could be broadcast with the interactive elements inserted in similar fashion to those techniques described in the parent case.

The broadcast or operations center (608) is where the task of either recording and broadcasting or creating and packaging the composite interactive programs is preferably performed. These programs are created to be received and viewed as both regular conventional television programs and as an interactive programs. Therefore, they must be created in such a manner that there is no noticeable difference to those noninteractive subscribers watching the conventional program when the interactive portions begin for authorized interactive subscribers. Likewise, when the interactive portions end and both groups of viewers again view the same video and hear the standard audio, there should be no noticeable transition.

The composite interactive programs that can be created include educational programs, home shopping programs, movies, children's programs, news programs, etc. The stored programs may be in analog or digital form and stored in permanent or volatile memory sources. In addition, live programs can be enhanced with interactive elements and broadcast to subscriber homes as part of the present invention.

The interactive program used in the present invention preferably comprises a single video, a standard audio channel, graphics and data codes, and a plurality of audio signals embedded therein to achieve interactivity. However, as described and shown above in connection with figures 3-8, the audio can be sent on separate channels, preloaded at the interactive program box (600), or stored separately in external data storage.

Any of these embodiments will work with the interactive trigger points of the current invention. The program must first be produced in a studio. The resulting program will comprise the conventional video and audio receivable on any television set (186). Next, the desired interactive sequences must be defined. The producer must decide which portions of the program will be interactive. These portions will be identified by trigger points. These trigger points correspond to the times when the program can be altered. The trigger points are essentially codes that will call macros that will be used to trigger the occurrence of each interactive sequence during the program.

Therefore, the producer must decide at what points in the program to include the interactive responses, i.e. the trigger points. The interrogatory messages required for soliciting viewer interests and answers must also be scripted. The alternative audio and graphics responses to possible viewer selections are also created by the producers. Next, the interrogatory messages, with possible system responses, must be mapped into predetermined trigger points. This mapping is made possible by developing an algorithm on a personal computer. The algorithm maps specific system responses (audio or graphic) to occur at the trigger points as a function of viewer selection(s). For example, if the user selects A to interrogatory #2, a predetermined audio or graphics response is selected to play at an identified trigger point.

Next, software in a personal computer compiles the above mapping into program transmission codes. The personal computer then controls the loading of the audio and data into the program stream at the appropriate times and inserts the codes into fields. Timing and control between the video and multiple audio elements, discussed above, are provided through the use of data codes. The data codes are stored in memory in a personal computer as part of the ACTV programming language. The codes comprise commands, or branch codes, for branching between channels (as discussed in the aforementioned ACTV patents and applications), timing signals for controlling the interactive program, codes defining each trigger point, data or text, commands for termination and initiation of interactive programming viewing, or triggers for executing macros.

Finally, the operating system software must be developed and loaded into the interactive program box (600). This software can be uploaded to the box on the cable and stored in RAM memory (282), loaded onto a cartridge or placed in ROM memory (286). This software comprises the macros that interpret subscriber inputs and map these inputs into specific interactive elements at a trigger point during the program.

At this point, the audio segments can be stored in a multichannel tape storage device or digital device for later use. When it is time for broadcast, the video and standard audio pass to an inserter (130) to be combined with the data codes and multiple audio channels at the appropriate time as commanded by a processor. As shown in Figure 1, the audio channels are preferably fed from the personal computer (114) into an audio mixer (118). Furthermore, this processing can be utilized to align the different audio response tracks in time.

The analog inserter (214) of a preferred embodiment is shown in more detail in Figure 9. The four audio output channels are fed into the inserter (214) to be mixed with the video and data. Each audio signal is preferably an analog signal. A buffer (222) is provided for each audio signal to electrically isolate the audio inserter (214) from the source of the audio signals. An amplifier amplifies the signals in order to converts the analog audio signals to a format which is fully compatible with the analog-to-digital (A/D) converter (234) discussed below.

The output of each buffer (222) is directed to a bank of low pass filters (226), one for each audio signal. In addition to reducing high frequency noise from the audio signal, the low pass filter (226) clips the audio signal to a desired frequency. The filtered audio output signals of the low pass filters (226) are directed as inputs to a multiplexer (230).

In a preferred embodiment, the multiplexer (230) is controlled by timing signals received from the timing circuit (254). The timing circuit (254) is synchronized with the video signal of the interactive program and controls the multiplexer (230) to sequentially take a sample from each audio signal and to direct the sample to an analog-to-digital (A/D) converter (234). The A/D converter (234) converts the samples of the four audio signals to an 8-bit digital format.

As shown in Figure 9, each of the four audio channels preferably has an associated first-in first-out (FIFO) pair (238, 242). The 8-bit digital samples for each signal are directed as an input to one of the FIFO pair (238, 242) associated with that signal. The samples for each channel are preferably directed to one of the FIFO pair (238, 242) for that channel until enough samples are in that FIFO to fill the desired number of lines of the video field into which the sampled audio is to be inserted. The audio samples are then directed to the other FIFO of the FIFO pair (238, 242) for that channel until that FIFO has the correct number of samples. In the meantime, the contents of the first FIFO are written onto the video signal. It is foreseen that other types of memory means may replace the FIFO pair (238, 242).

When the content of a particular FIFO is to be inserted into the video, the digitized audio samples stored in that FIFO are directed (first-in-first-out) to a digital-to-analog (D/A) converter (246), as shown in Figure 9. The D/A converter (246) converts the stream of digitized audio samples into an analog PAM (pulse amplitude modulated) signal. A second buffer (250) is provided for electrically isolating the inserter circuit from the switching circuitry (258) which multiplexes the audio signals into the video signal.

In a preferred embodiment, the audio signals A and B are each inserted independently onto 5 lines of one field of the video signal, and audio signals C and D are inserted independently onto 5 lines of the other field of the video signal. In order to enable continuous audio playback for each channel, the audio for each channel must be compressed so that 5 lines of video per frame contain enough audio content for the playback time of one frame of video (about 1/30th of a second).

The number of samples of audio required for each channel depends upon the desired sound quality. If lower sound quality is desired, fewer lines of video may be used, and vice versa.

In the preferred embodiment five (5) lines of video are used per frame per channel of audio, with 105 samples per line at a sampling rate of 15,734 samples per second. The multiplexer (230) sequentially samples each audio signal 15,734 times per second and alternatively directs 525 samples to each of the FIFO's (238, 242) associated with each audio channel. At a predetermined time before the audio from each channel is to be inserted into the video signal, the timing circuit (254), shown in Figure 9, instructs the full FIFO for the channel to write the digital audio to the D/A converter (246) which converts it to a PAM signal. The timing circuit (254) then switches the video selector (258) to receive the PAM audio signal through the buffer (250) as an input in lieu of the video signal. In this manner, the additional audio channels are inserted into the video. The standard audio remains unaffected in the normal audio carrier. Once the audio has been inserted into the video at the desired location, the timing circuit (254) commands the video select switch (258) to change its input back to the video signal. This process is repeated for each audio signal at the video lines wherein that audio signal is to be inserted into the video signal.

Typically, ten lines of the Vertical Blanking Interval (VBI) of the video signal are available for use in each field of video. In the preferred embodiment, for each frame of video, audio signals A and B are each inserted on five lines of the VBI of one field, and audio signals C and D are each inserted on five lines of the VBI of the other field. The desired audio quality and number of audio channels dictates the number of lines of video which must be used to transmit the signals. Preferably, all of the additional audio channels can be inserted into the VBI. However, because of regulations regarding broadcast transmissions and other uses of the video lines, if more lines are required for the audio services then active picture lines may have to be used. These active lines can be grouped and placed at the top or bottom of the picture which effectively will nor interfere with the viewed video due to the overscanning of most television sets. Alternatively, the lines can be randomly interspersed throughout the program.

In the preferred embodiment, data is preferably sent on line 21 of the vertical blanking interval (VBI) using the predefined standard for transmitting data on line 21. The line 21 data is preferably sent as 16 bits of serial data per field, and is placed into the video signal using a standard line 21 encoder. However, the data can alternatively be inserted on other lines of the video.

In an alternative embodiment, instead of inserting analog PAM samples as shown in Figure 9, multi-level digital samples, such as ADPCM samples may be inserted into the assigned VBI lines. In this embodiment, a bandpass filter would filter the wideband analog audio in the desired frequency range. The signal is then sampled at some frequency rate in a sampler. Next, the PAM audio samples are quantized into one of n levels. An encoder then maps the amplitude levels selected by the quantizer into preferably a three bit ADPCM samples. These samples are buffered and preferably converted from binary to an 8-level converter. The ADPCM audio samples are then inserted in the video at the direction of a processor into the designated VBI lines. At the receiver, the corresponding extractor (174) sends the signal to a digital to analog converter and subsequently to a low pass filter to receive the filtered analog output. This embodiment has the advantage of reducing end-to-end quantization noise and provides some degree of immunity to channel noise and to noise resulting from VCR recording and playback of the video/analog signal.

Several additional audio signals may be transmitted along with the interactive video signal in other ways. An audio signal may be transmitted over each of the normal audio channels. The audio may be distributed in many ways using the available audio channels. For example, high quality background music for the interactive program could be transmitted over the normal audio channel. Then, lower quality audio for voice-overs could be inserted onto the video signal and/or using the SAP signal. Preferably, the audio segments are aligned serially in the SAP channel. This would enable a larger number of audio signals to be transmitted with the interactive program. In addition, the audio channels could also simply be combined with the video and data signals via a frequency division multiplexer. The audio channels can be digitized using any common analog-to-digital conversion technique such as PCM, DM, ADPCM, etc. Finally, vocoders (e.g., LPC, APC, channel vocoders) can be employed to reduce the required data rates and bandwidth requirements for transmitting voice.

Thus, there are many variations in which the present invention may be used to facilitate the transmission of multiple audio channels. In one possible alternative embodiment, instead of embedding the plurality of audio channels in the video signal, the channels are all sent as one audio signal using serial sequencing. Serial sequencing is defined by reading the audio tracks from memory serially in sequence (i.e., A1, then A2, then A3, etc.). The resulting signal is then sent as a secondary channel, or SAP channel, with the primary channel containing the standard audio. In this embodiment, these particular audio tracks would have to be sent prior to the time when the answers are scheduled to be played to the subscribers. Therefore, when the SAP channel is received at the interactive program box (600), the signals will be independently decoded from the SAP channel, buffered and stored in memory (284) for later use when it is appropriate to playback the responses to the subscriber. The interactive program box (600) for this embodiment is described above and shown in figure 6.

Alternatively, the interactive system of the present invention can provide for transmission of the interactive signal by digital transmission means, resulting in reduced bandwidth requirements. In the digital transmission embodiment the interactive signal can be transmitted by not only satellite but ATM, Sonet, Tl or any other digital transmission system.

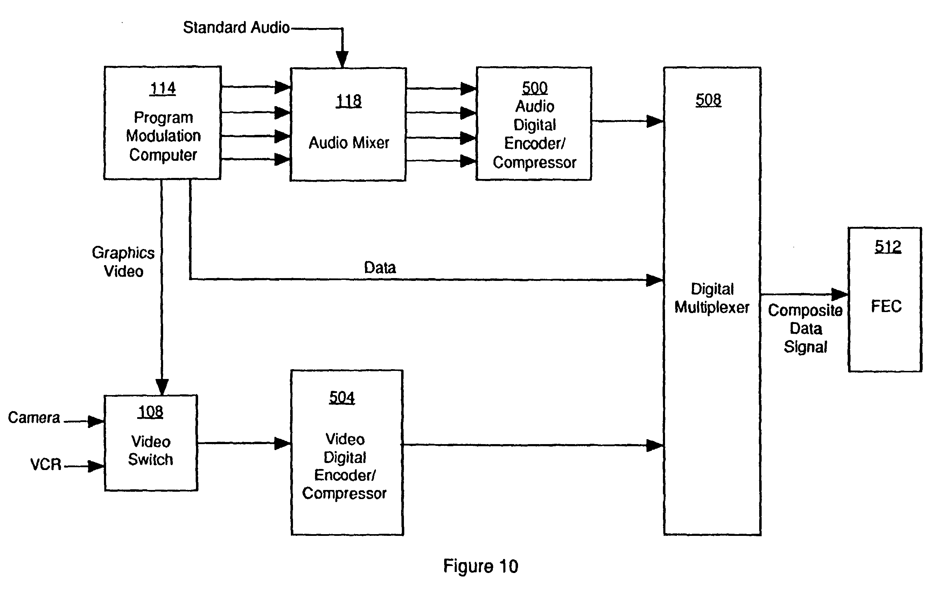

The digital transmission components at the operations center (608) are shown in Figure 10. As shown in Figure 10, the plurality of audio signals are output from a personal computer (114) or tape storage device and mixed in the audio mixer (118) with the conventional audio, preferably resulting in four output channels. The audio signals are then preferably sampled, encoded and compressed in the audio digital encoder/compressor (500). The encoding technique can be a waveform coding technique such as PCM, ADPCM or DM. Alternatively, the signals can be encoded using synthesizer or vocoder techniques such as MUSICAM, Linear Predictive Coding (LPC). Adaptive Predictive Coding (APC), and Sub-band coding. A single composite audio signal is output from the audio digital encoder/compressor (500).

As shown in Figure 10, the video signal is input into the video switch (108) which outputs one of the video signals. The video digital encoder/compressor (504) takes the video signal, encodes and compresses the signal according to a known standard such as MPEG-1, MPEG-2, JPEG, or other DCT based coding scheme, wavelets, fractals or other transform based approaches. Alternatively, the video digital encoder/compressor (504), shown in Figure 10, could utilize a waveform based technique, such as PCM, ADPCM, or DM, for encoding and compressing the video signal.

The data from the personal computer (114), in Figure 10, is preferably compressed via a board in the computer (114) and delivered directly to the digital multiplexer (508). The digitized data, video and audio signals are delivered to the digital multiplexer (508) where the signals are buffered and combined via time division multiplexing, with appropriate synchronization signals applied, to form a composite sync serial data stream. At the output of the digital multiplexer (508), forward error correction (FEC), the code depending on the selected transmission path, is applied by an FEC encoder (512). The composite interactive digital signal is then transmitted to the receivers (158) via a suitable transmission means such as satellite, fiber optic, cable, DS, etc.

In summary, the operations center (608) creates and transmits an interactive video signal by taking video, inserting multiple audio channels and data codes, and transmitting the resulting interactive video signal to the transmission system.

### E. The Transmission System

As shown in Figure 1, the system uses an interactive program delivery system (98) with any broadcast transmission means including satellite (150), cable (138) or television (142) to deliver the interactive program for distribution to the subscriber homes. Likewise, distribution of the signal at the receive end can be by any suitable transmission means (166) including a cable distribution system, fiber optic, etc. In a satellite broadcast transmission (150), the interactive video signal is transmitted to uplink equipment (146) where it may be multiplexed, upconverted, modulated, amplified and transmitted by satellite (150) to a receiver site (154) for distribution to the classroom locations. In the analog environment, the interactive video signal enters an analog receiver (158) and then preferably a cable distribution system (166) that directs the signal to subscriber locations. In the alternative digital embodiment, the composite digital interactive signal enters a receiver (158) where it is demodulated and then preferably passed to a digital cable distribution system that directs the signal to the subscriber locations. Although a cable distribution system (166) is the preferred transmission media to the remote sites, the interactive video signal may also be distributed by any conventionally known technique, such as DBS, fiberoptics, low or high power broadcast television, telephone lines, cellular networks, and similar technology can be used interchangeably with this program delivery system.

### F. Return Path

If desired, status messages and participant information can be sent back from the remote sites to the operations center (608) via return paths. For example, subscriber selections could be stored in RAM (282) and later forwarded to the operations center (608) to aid in creating a subscriber profiles for targeted advertising. The return paths can be dial-up telephone lines or via an X.25 packet switched network, cable, wireless networks, etc. The preferred method of sending this information back is based on subscriber initiation. The alternative method of sending this information is by polling the remote sites from the operations center computer (114). Alternatively, the remote sites can send performance information and messages after consolidation, at periodic intervals.

If the interactive program box (600) functions are performed at the cable headend as part of a multi-user system, as described above, then the return path takes on greater importance. However, the path to and from the cable headend can be viewed simply as an extension of the signal path between the interactive program box (600) in the home and the television set (186).

Input can be transmitted back to the operations center (608) in a two way cable system or in a telephone system via a modem (312). The modem (312) is connected to the controller as shown in figures 3 and 6-8. The controller could send to the modem (312) a series of data streams characterizing the viewer's particular interests.

### III. System Operation

The simulcast system operates through the preparation, transmission and reception of a composite interactive program that can provide an interactive program to those subscribers' homes equipped with an interactive program box (600) and a regular television program for those homes not so equipped. As mentioned above, this dual functionality is provided by preferably embedding in primarily the nonvisual intervals of a standard video signal a plurality of audio segments, graphics data and programming control data, the reception and processing of which provides a fully interactive experience for subscribers. Alternatively, the audio segments can be prestored at the interactive program box (600), stored in external data storage (629), sent down in serial fashion on the SAP or sent serially or in parallel on a separate channel.

Information is stored on each audio segment. Each audio segment comprises messages in response to user selection(s) on the keypad (604). When the program begins, an INITIATION command is sent from the broadcast or operations center (608) to all the interactive program boxes (600). The television set (186) is directed to default to a predetermined channel (e.g., channel 1).

Initially, the unauthorized and authorized interactive subscribers view the same standard television program with both viewing the standard video and hearing the standard audio. For noninteractive subscribers, the standard video and audio is all they view and hear for the entire program. The interactive subscribers, on the other hand, are able to interact with the program during designated time periods.

At some point in time, trigger point codes are embedded in the composite interactive program signal, the trigger points indicating the initiation of an interactive program. The VBI data codes immediately inform the interactive program box (600) that the program is interactive. The controller (178) begins decoding the codes after detection. Graphics codes will also be sent as part of the signal. These codes enable the interactive program box processor (178) to read the graphics bit maps from memory (282, 286), corresponding to the codes, and direct the character generator (624) to overlay the graphics onto a predetermined portion of the screen. In this manner, the first graphics interrogatory message can be displayed on the screen.

While in the preferred embodiment and for purposes of illustration, the graphics messages are interrogatory, they may also be instructional, request user to select amongst several options to receive special features, provide status, or request subscriber profile information from the subscriber. The graphics overlay may consist of simple alphanumeric characters forming a message or more sophisticated characters such as pictorial cartoon characters. While both the interactive and noninteractive subscribers are hearing the standard audio, the interactive viewers are requested through the use of the graphics overlay to enter a choice on their keypads (604) or if the viewer is interacting via a personal computer (187), the keyboard connected to the personal computer (187).

In this manner, at the next trigger point, the controller directs the audio switch (620) to cut away from the standard audio and begin to play an introductory message such as "Hi, welcome to the show, this is an interactive show. Would you like to interact with the show?" If the viewer desires to interact, he or she depresses the YES button on the remote, and the interactive show will begin. If the viewer does not wish to interact with the program, the controller directs the audio switch to branch back to the standard audio and the television will pick back up the conventional television program in progress.

Simultaneously, a BEGIN INPUT command is sent to all of the interactive program box controllers (178) instructing then to accept input from the infrared remotes (604). The last input before the expiration of the INPUT period is accepted as the subscriber's selection by the system.

After the viewer has properly indicated their desire to interact with the program, preferably a set of graphics interrogatory messages will be presented one after another to solicit user selection useful for obtaining desired viewer information. For example, assume the show being presented is a show on redecorating a kitchen. First, an audio segment will be played stating "Hi, this is a show on redecorating your kitchen, are you interested in redecorating your kitchen, YES or NO"? If the user selects the YES button on the remote, another audio segment may play "Well, thank you very much. Let me ask you a couple of quick questions on the display." At this point, the microprocessor (178) accesses a series of graphics interrogatory messages stored in memory (282, 286) and directs the overlay chip (624) to display the graphics messages in predetermined order. The user responses to these questions are used later in the program at particular trigger points for presenting interactive messages to the viewer. A series of sample interrogatory messages may be displayed in succession as follows:
"DO YOU HAVE WINDOWS IN YOUR KITCHEN?
A. YES
B. NO."
"HOW BIG IS YOUR KITCHEN?"
A. 10*20 B. 20*30 C. 30*40 D. 40*50 E. 50*60"
"WHAT IS YOUR COLOR SCHEME?
A. WHITE B. BROWN C. BLUE D. GREEN E. YELLOW"
"WHAT TYPE OF FLOOR DO YOU HAVE?
A. WOOD B. FORMICA C. TILE"

Preferably, no audio accompanies the display of the graphics interrogatory messages. The selections made by the user above are received by the interactive program box (600), tagged with a code designating the particular related question and stored in memory (282, 286) for later use at the appropriate time. When a trigger point is identified by the controller (178), the embedded data codes will identify the question corresponding to that trigger point. The controller (178) will access the memory location address identified with the particular question and request the transfer of the particular user input answer to that question. This user input is mapped via some algorithm into an appropriate audio segment.

For example, suppose the narrator in the conventional program is currently discussing the size of the kitchen. At the next trigger point, the controller will access the memory location corresponding to the kitchen size question listed above. Assuming the user selected response "A. 10*20", the controller may select and forward the following audio response to the audio switch, "Since you have a very small kitchen, may I suggest that you not put a dining room table in your kitchen." At the conclusion of this segment, the controller directs the controller (178) to switch back to the standard audio. At the next trigger point, a similar sequence as described above will occur. In this manner, personalized interactivity is provided at unexpected times to the subscriber.

For unauthorized subscribers, the interactive program box (600) acts similarly to a cable set top converter box. However, the interactive program box (600) is not required for reception of the conventional program by noninteractive subscribers. If the subscriber has the box (600) but is not authorized to interact with the program for some reason, the video demodulator (616) simply demodulates the signal and the standard audio and video are transferred through the audio switch to the TV set (186) for presentation for the subscriber.

Another application of the memory capability of the present invention is targeted marketing of subscribers. In this application, the interactive program box processor compiles and stores information including the interactive program box number associated with the subscriber, time and date of the program viewing, the list of subscriber selections made by the subscriber during the program, and the program ID (contained in the program codes broadcast with the program). This data is preferably stored together in data packets. From this data, a data code can be generated which provides an overall profile of the subscribers purchasing desires. This data code can either be sent via modem and over telephone lines to a retail location or displayed or printed out at the subscriber home. This code can then be used by the retail stores to offer unique purchasing price reductions and other options to the subscribers.

While in the preferred embodiment, the system has been described as a simulcast system whereby both an interactive program and a noninteractive program are broadcast to subscribers, the system does not require the program to be noninteractive. In other words, the system is not limited to providing the dual functional programs but can simply provide interactive programming, not receivable without the interactive program boxes (600), using the same elements described above.

The above systems of the present invention can be combined with those described in earlier U.S. Patents Nos. 4,847,700, 4,507,680, 4,573,072, 4,602,279, 4,364, 925, and 4,264, 924 resulting in home viewers equipped with a more sophisticated decoder box to receive more enhanced interactivity such as instant replay, targeted advertising, etc., through second or third transmitted video signals, all of which can be provided with the personalized audio and graphics in the manner described above.

Using the foregoing embodiments, methods and processes, the ACTV simulcast system maximizes personalized attention and interactivity to subscribers in their homes in real time using a low cost interactive system. Although the present invention has been described in detail with respect to certain embodiments and examples, variations and modifications exist which are within the scope of the present invention as defined in the following claims.

## Claims

1. An interactive program production system (608) for creating a single composite interactive signal for transmission within a conventional television bandwidth to multiple subscribers, the composite interactive signal comprising both a conventional television program and a fully interactive program, the production system comprising:
means (108, 133) for storing or receiving at least one conventional video signal comprising standard audio and standard video;
means (118) for providing a plurality of audio channels for providing personalised responses to subscriber selections, the audio channels comprising audio segments which are of substantially equal length in time;
means (114) for generating graphics data and for creating control data for controlling the use of the audio channels and the graphics data; and
means (132, 214, 508, 512) for combining the conventional video signal with the graphics data and the control data to form said single composite interactive signal, wherein said control data includes codes which are embedded in the video signal and which are arranged to initiate and control the play of selected ones of the audio channels and the use of the graphics data.

2. An interactive program production system as claimed in Claim 1, wherein said combining means is arranged to embed audio segments into said video signal.

3. An interactive program production system as claimed in Claim 1 or Claim 2 further comprising means (118) for producing audio channels for transmission separately to said single composite interactive signal, said codes embedded in the video signal being arranged to initiate and control the play of separately transmitted audio channels.

4. An interactive program production system as claimed in any preceding claim, wherein the graphics data embedded in the video signal comprises graphics messages arranged to be overlaid on the video under the initiation and control of the embedded codes of the control data.

5. An interactive program production system as claimed in any preceding claim, wherein the graphics data embedded in the video signal is arranged to enable generation of graphics for display by way of character generator means (624).

6. An interactive program production system as claimed in any preceding claim, wherein said codes embedded in the video signal identify trigger points of the interactive program at which responses to user selections can occur.

7. An interactive program production system as claimed in Claim 6, wherein said codes embedded in the video signal comprise a header identifying the occurrence of a trigger point, a function ID identifying whether it is an audio message or a graphics message which is to be initiated, and a corresponding audio or graphics interrogatory message to be played or displayed.

8. An interactive program production system as claimed in any preceding claim further comprising:
means for digitally encoding the conventional video signal and the plurality of audio channels; and
means for multiplexing the control and graphics data, the plurality of audio channels and the conventional video signal into a single composite digital interactive signal.

9. An interactive program production system as claimed in any of Claims 1 to 7, wherein the conventional video signal, graphics and control data, and the plurality of audio channels are analog and the combining means (132; 214) comprises means for embedding the graphics and control data, plurality of audio channels and conventional video signal into a standard NTSC video signal.

10. An interactive program production system as claimed in Claim 9, wherein the conventional video signal comprises a vertical blanking interval and the embedding means comprises means for inserting the graphics and control data and the plurality of audio channels into the vertical blanking interval.

11. An interactive program production system as claimed in any preceding claim, wherein the means (118) for providing a plurality of audio channels comprises means for linking a sequence of audio response segments in each channel forming an array of stacked audio segments so that the quantity of selectable audio response segments is greater than the quantity of the plurality of audio channels.

12. An interactive program production system as claimed in any preceding claim, further comprising means for recording the composite interactive signal for later transmission.

13. An interactive system (600) for receiving a composite interactive signal which comprises both a conventional television program and a fully interactive program, wherein the composite interactive signal comprises at least one conventional video signal comprising standard audio and standard video combined with graphics data and control data, and a plurality of audio channels, said control data including codes which are embedded in the video signal, and wherein said interactive system (600) comprises:
means for receiving the composite interactive signal;
means (616, 174; 617, 175; 616, 175) for extracting the graphics data and the control data from the video signal;
demodulator means (616) for demodulating the standard audio and video, and modulation means (622) for applying the video to a display and the audio to an audio output;
processor means (178) coupled to the extracting means (616, 174; 617, 175; 616, 175) and responsive to the extracted control data, and
an audio switch (620) controllable by said processor means (178),
wherein said processor means (178) is arranged to identify the extracted control data as instructions for the play of a selected audio channel or the use of the graphics data and is arranged either to direct a selected audio channel to the audio switch (620) for application to the audio output, or to cause the use of the graphics data at the initiation of codes of said control data.

14. An interactive system (600) for receiving a composite interactive signal as claimed in Claim 13, wherein, where a plurality of audio channels are combined with the conventional video signal and with the graphics data and control data, said extracting means (616, 174) is arranged to also extract the audio channels from the video signal.

15. An interactive system (600) for receiving composite interactive signal as claimed in Claim 13 or Claim 14, further comprising a memory (702) for storing a plurality of audio channels, said memory (702) being controllable by said processor means (178) such that a stored audio channel in said memory (702) may be selected for play by said processor (178) in response to extracted control data.

16. An interactive system (600) for receiving a composite interactive signal as claimed in any of Claims 13 to 15, further comprising a character generator (624) controllable by said processor means (178) and arranged, upon receipt of instructions from said processor means to generate graphics determined by the extracted graphics data, and wherein said character generator (624) outputs the generator graphics to said modulation means (622) for display by said monitor overlaying said video.

17. An interactive system (600) for receiving a composite interactive signal as claimed in any of Claims 13 to 16, further comprising a subscriber interface (604, 628) arranged to communicate with said processor means (178) to provide entries from a subscriber, and wherein said processor means (178) selects graphics data to use, or an audio channel to play, in response to a subscriber entry, and initiates the play of the audio channel or the use of the graphics data at a time determined by codes of the control data.

18. An interactive system (600) for receiving a composite interactive signal as claimed in any of Claims 13 to 17, further comprising storage means (284) for storing the graphics data and the control data extracted from the video signal, wherein the stored control data includes branching codes and the stored graphic data includes interrogatory messages or codes pointing to interrogatory messages.

19. An interactive system (600) for receiving a composite interactive signal as claimed in Claim 18 as appended to Claim 17, wherein subscriber entries are stored in said storage means (284) and said processor means (178) is arranged to select graphics data to use or an audio channel to play at a time determined by codes of the control data and in response both to a current subscriber entry and stored subscriber entries.

20. A method of receiving a composite interactive signal for display as a television program with interactivity, wherein the composite interactive signal comprises both a conventional television program and a fully interactive program, and comprises at least one conventional video signal comprising standard audio and standard video combined with graphics data and control data, and plurality of audio channels, said control data including codes which are embedded in the video signal, the method comprising the steps of:
receiving the composite interactive signal;
extracting the graphics data and the control data from the video signal;
demodulating the standard audio and video, and applying the video to a display and the audio to an audio output;
identifying extracted control data as instructions to play a selected one of the plurality of audio channels or to use the graphics data, and directing the selected audio channel to the audio output or using the graphics data at a time determined by codes of said control data.

21. A method of receiving a composite interactive signal as claimed in Claim 20, where a plurality of audio channels are combined with the conventional video signal, and further comprising extracting the plurality of audio channels from the video signal.

22. A method of receiving a composite interactive signal as claimed in Claim 20 or Claim 21, further comprising using the graphics data to generate graphics and applying the generated graphics to said display to overlay the displayed video.

23. A method of receiving a composite interactive signal as claimed in any of Claims 20 to 22, further comprising receiving subscriber entries and selecting the audio channel to play or the graphics data to use in response to said subscriber entry.

24. A method of receiving a composite interactive signal as claimed in any of Claims 20 to 23, further comprising storing the graphics data and the control data extracted from the video signal, the stored control data including branching codes, and the stored graphics data including interrogatory messages or codes pointing to interrogatory messages.

## Patentansprüche

1. Interaktives Programmproduktionssystem (608) zum Erzeugen eines einzigen zusammengesetzten interaktiven Signals für die Übertragung in einer herkömmlichen Fernsehbandbreite zu mehreren Teilnehmern, wobei das zusammengesetzte interaktive Signal sowohl ein herkömmliches Fernsehprogramm als auch ein voll interaktives Programm enthält, umfassend:
ein Mittel (108, 133) zum Speichern oder Empfangen mindestens eines herkömmlichen Videosignals, das Standard-Audiomaterial und Standard-Videomaterial enthält;
ein Mittel (118) zum Bereitstellen mehrerer Audiokanäle zum Bereitstellen personalisierter Antworten auf Teilnehmerauswahlen, wobei die Audiokanäle Audiosegmente enthalten, die im wesentlichen eine gleiche Zeitdauer aufweisen;
ein Mittel (114) zum Erzeugen von Grafikdaten und zum Erzeugen von Steuerdaten zum Steuern der Benutzung der Audiokanäle und der Grafikdaten; und
ein Mittel (132, 214, 508, 512) zum Kombinieren des herkömmlichen Videosignals mit den Grafikdaten und
den Steuerdaten, um das einzige zusammengesetzte interaktive Signal zu bilden, wobei die Steuerdaten Codes enthalten, die in das Videosignal eingebettet sind und die so ausgelegt sind, dass sie das Abspielen gewählter der Audiokanäle und die Verwendung der Grafikdaten steuern.

2. Interaktives Programmproduktionssystem nach Anspruch 1, wobei das Kombiniermittel so ausgelegt ist, dass es Audiosegmente in das Videosignal einbettet.

3. Interaktives Programmproduktionssystem nach Anspruch 1 oder Anspruch 2, weiterhin mit einem Mittel (118) zum Produzieren von Audiokanälen für eine von dem einzigen zusammengesetzten interaktiven Signal separate Übertragung, wobei die in das Videosignal eingebetteten Codes so ausgelegt sind, dass sie das Abspielen separat übertragener Audiokanäle steuern.

4. Interaktives Programmproduktionssystem nach einem der vorhergehenden Ansprüche, wobei die in das Videosignal eingebetteten Grafikdaten Grafikmitteilungen umfassen, die dafür ausgelegt sind, unter Einleitung und Steuerung der eingebetteten Codes der Steuerdaten dem Videomaterial überlagert zu werden.

5. Interaktives Programmproduktionssystem nach einem der vorhergehenden Ansprüche, wobei die in das Videosignal eingebetteten Grafikdaten so ausgelegt sind, dass sie die Erzeugung von anzuzeigenden Grafiken mit Hilfe eines Zeichengeneratormittels (624) ermöglichen.

6. Interaktives Programmproduktionssystem nach einem der vorhergehenden Ansprüche, wobei die in das Videosignal eingebetteten Codes Auslösepunkte des interaktiven Programms identifizieren, an denen Reaktionen auf Benutzerauswahlen erfolgen können.

7. Interaktives Programmproduktionssystem nach einem der vorhergehenden Ansprüche, wobei die in das Videosignal eingebetteten Codes folgendes umfassen: einen Kopfteil, der das Auftreten eines Auslösepunkts identifiziert, eine Funktions-ID, die identifiziert, ob eine Audiomitteilung oder eine Grafikmitteilung eingeleitet werden soll, und eine abzuspielende bzw. anzuzeigende entsprechende Audio- oder Grafikabfragemitteilung.

8. Interaktives Programmproduktionssystem nach einem der vorhergehenden Ansprüche, weiterhin umfassend:
ein Mittel zum digitalen Codieren des herkömmlichen Videosignals und der mehreren Audiokanäle; und
ein Mittel zum Multiplexen der Steuer- und Grafikdaten, der mehreren Audiokanäle und des herkömmlichen Videosignals zu einem einzigen zusammengesetzten digitalen interaktiven Signal.

9. Interaktives Programmproduktionssystem nach einem der Ansprüche 1 bis 7, wobei das herkömmliche Videosignal, die Grafik- und Steuerdaten und die mehreren Audiokanäle analog sind und das Kombiniermittel (132; 214) ein Mittel zum Einbetten der Grafik- und Steuerdaten, der mehreren Audiokanäle und des herkömmlichen Videosignals in ein Standard-NTSC-Videosignal umfasst.

10. Interaktives Programmproduktionssystem nach Anspruch 9, wobei das herkömmliche Videosignal ein Vertikal-Austastintervall umfasst und das Einbettmittel ein Mittel zum Einfügen der Grafik- und Steuerdaten und der mehreren Audiokanäle in das Vertikal-Austastintervall umfasst.

11. Interaktives Programmproduktionssystem nach einem der vorhergehenden Ansprüche, wobei das Mittel (118) zum Bereitstellen mehrerer Audiokanäle ein Mittel zum Verknüpfen einer Sequenz von Audioantwortsegmenten in jedem Kanal, wodurch ein Array gestapelter Audiosegmente gebildet wird, so dass die Menge an wählbaren Audioantwortsegmenten größer als die Menge der mehreren Audiokanäle ist, umfasst.

12. Interaktives Programmproduktionssystem nach einem der vorhergehenden Ansprüche, weiterhin mit einem Mittel zum Aufzeichnen des zusammengesetzten interaktiven Signals zur späteren Übertragung.

13. Interaktives System (600) zum Empfangen eines zusammengesetzten interaktiven Signals, das sowohl ein herkömmliches Fernsehprogramm als auch ein voll interaktives Programm enthält, wobei das zusammengesetzte interaktive Signal mindestens ein herkömmliches Videosignal, das Standard-Audiomaterial und Standard-Videomaterial kombiniert mit Grafikdaten und Steuerdaten und mehrere Audiokanäle enthält, wobei die Steuerdaten Codes enthalten, die in das Videosignal eingebettet sind, und wobei das interaktive System (600) folgendes umfasst:
ein Mittel zum Empfangen des zusammengesetzten interaktiven Signals;
ein Mittel (616, 174; 617, 175; 616, 175) zum Extrahieren der Grafikdaten und der Steuerdaten aus dem Videosignal;
ein Demodulatormittel (616) zum Demodulieren des Standard-Audio- und Standard-Videomaterials und ein Modulationsmittel (622) zum Anlegen des Videomaterials an eine Anzeige und des Audiomaterials an einen Audioausgang;
ein an das Extrahiermittel (616, 174; 617, 175; 616, 175) angekoppeltes Prozessormittel (178), das auf die extrahierten Steuerdaten reagiert, und
ein durch das Prozessormittel (178) steuerbarer Audioschalter (620),
wobei das Prozessormittel (178) so ausgelegt ist, dass es die extrahierten Steuerdaten als Anweisungen für das Abspielen eines gewählten Audiokanals oder die Verwendung der Grafikdaten identifiziert und so ausgelegt ist, dass es entweder einen gewählten Audiokanal zum Anlegen an den Audioausgang zu dem Audioschalter (620) leitet oder die Verwendung der Grafikdaten bei der Einleitung von Codes der Steuerdaten bewirkt.

14. Interaktives System (600) zum Empfangen eines zusammengesetzten interaktiven Signals nach Anspruch 13, wobei, wenn mehrere Audiokanäle mit dem herkömmlichen Videosignal und mit den Grafikdaten und den Steuerdaten kombiniert werden, das Extrahiermittel (616, 174) so ausgelegt ist, dass es auch die Audiokanäle aus dem Videosignal extrahiert.

15. Interaktives System (600) zum Empfangen eines zusammengesetzten interaktiven Signals nach Anspruch 13 oder Anspruch 14, weiterhin mit einem Speicher (702) zum Speichern mehrerer Audiokanäle, wobei der Speicher (702) durch das Prozessormittel (178) steuerbar ist, so dass als Reaktion auf extrahierte Steuerdaten ein gespeicherter Audiokanal in dem Speicher (702) für ein Abspielen durch den Prozessor (178) ausgewählt werden kann.

16. Interaktives System (600) zum Empfangen eines zusammengesetzten interaktiven Signals nach einem der Ansprüche 13 bis 15, weiterhin mit einem durch das Prozessormittel (178) steuerbaren Zeichengenerator (624), der so ausgelegt ist, dass er bei Empfang von Anweisungen aus dem Prozessormittel durch die extrahierten Grafikdaten bestimmte Grafiken erzeugt, und wobei der Zeichengenerator (624) die Generatorgrafiken zur Anzeige durch den Monitor als Überlagerung des Videomaterials an das Modulationsmittel (622) ausgibt.

17. Interaktives System (600) zum Empfangen eines zusammengesetzten interaktiven Signals nach einem der Ansprüche 13 bis 16, weiterhin mit einer Teilnehmerschnittstelle (604, 628), die so ausgelegt ist, dass sie mit dem Prozessormittel (178) kommuniziert, um Einträge von einem Teilnehmer bereitzustellen, und wobei das Prozessormittel (178) als Reaktion auf einen Teilnehmereintrag zu verwendende Grafikdaten oder einen abzuspielenden Audiokanal wählt und das Abspielen des Audiokanals oder die Verwendung der Grafikdaten zu einem durch Codes der Steuerdaten bestimmten Zeitpunkt einleitet.

18. Interaktives System (600) zum Empfangen eines zusammengesetzten interaktiven Signals nach einem der Ansprüche 13 bis 16, weiterhin mit einem Speichermittel (284) zum Speichern der Grafikdaten und der Steuerdaten, die aus dem Videosignal extrahiert werden, wobei die gespeicherten Steuerdaten Verzweigungscodes und die gespeicherten Grafikdaten Abfragemitteilungen oder auf Abfragemitteilungen zeigende Codes enthalten.

19. Interaktives System (600) zum Empfangen eines zusammengesetzten interaktiven Signals nach Anspruch 18 als Erweiterung von Anspruch 17, wobei in dem Speichermittel (284) Teilnehmereinträge gespeichert werden und das Prozessormittel (178) so ausgelegt ist, dass es zu einem durch Codes der Steuerdaten und als Reaktion sowohl auf einen aktuellen Teilnehmereintrag als auch auf gespeicherte Teilnehmereinträge bestimmten Zeitpunkt zu benutzende Grafikdaten bzw. einen abzuspielenden Audiokanal auswählt.

20. Verfahren zum Empfangen eines zusammengesetzten interaktiven Signals zur Anzeige als ein Fernsehprogramm mit Interaktivität, wobei das zusammengesetzte interaktive Signal sowohl ein herkömmliches Fernsehprogramm als auch ein voll interaktives Programm und mindestens ein herkömmliches Videosignal, das Standard-Audiomaterial und Standard-Videomaterial kombiniert mit Grafikdaten und Steuerdaten und mehrere Audiokanäle enthält, wobei die Steuerdaten Codes enthalten, die in das Videosignal eingebettet sind, mit den folgenden Schritten:
Empfangen des zusammengesetzten interaktiven Signals;
Extrahieren der Grafikdaten und der Steuerdaten aus dem Videosignal;
Demodulieren des Standard-Audio- und - Videomaterials und Anlegen des Videomaterials an eine Anzeige und des Audiomaterials an einen Audioausgang;
Identifizieren extrahierter Steuerdaten als Anweisungen zum Abspielen eines gewählten der mehreren Audiokanäle oder zum Verwenden der Grafikdaten, und Leiten des gewählten Audiokanals zu dem Audioausgang oder Verwenden der Grafikdaten zu einem durch Codes der Steuerdaten bestimmten Zeitpunkt.

21. Verfahren zum Empfangen eines zusammengesetzten interaktiven Signals nach Anspruch 20, wobei mehrere Audiokanäle mit dem herkömmlichen Videosignal kombiniert werden und bei dem weiterhin die mehreren Audiokanäle aus dem Videosignal extrahiert werden.

22. Verfahren zum Empfangen eines zusammengesetzten interaktiven Signals nach Anspruch 20 oder Anspruch 21, bei dem weiterhin die Grafikdaten zur Erzeugung von Grafiken und die erzeugten Grafiken an die Anzeige angelegt werden, um das angezeigte Videomaterial zu überlagern.

23. Verfahren zum Empfangen eines zusammengesetzten interaktiven Signals nach einem der Ansprüche 20 bis 22, bei dem weiterhin Teilnehmereinträge empfangen und der abzuspielende Audiokanal oder die zu verwendenden Grafikdaten als Reaktion auf den Teilnehmereintrag ausgewählt werden.

24. Verfahren zum Empfangen eines zusammengesetzten interaktiven Signals nach einem der Ansprüche 20 bis 23, bei dem weiterhin die Grafikdaten und die Steuerdaten, die aus dem Videosignal extrahiert werden, gespeichert werden, wobei die gespeicherten Steuerdaten Verzweigungscodes und die gespeicherten Grafikdaten Abfragemitteilungen oder auf Abfragemitteilungen zeigende Codes enthalten.

## Revendications

1. Système interactif de production de programme (608) pour la création d'un unique signal composite interactif pour transmission dans le cadre d'une bande passante de télévision conventionnelle à de multiples abonnés, le signal interactif composite comprenant à la fois un programme conventionnel de télévision et un programme pleinement interactif, le système de production comprenant :
des moyens (108, 133) permettant d'enregistrer ou recevoir au moins un signal vidéo conventionnel comprenant de l'audio standard et de la vidéo standard ;
des moyens (118) permettant de fournir une pluralité de canaux audio afin de donner des réponses personnalisées à des sélections d'abonnés, les canaux audio comprenant des segments audio lesquels sont de durées sensiblement égales en temps ;
des moyens (114) permettant de générer des données graphiques et de créer des données de contrôle permettant de contrôler l'utilisation des canaux audio et des données graphiques ; et
des moyens (132, 214, 508, 512) permettant de combiner le signal vidéo conventionnel avec les données graphiques et les données de contrôle pour former ledit signal composite interactif unique, dans lequel lesdites données de contrôle incluent des codes qui sont incorporés dans le signal vidéo et qui sont agencés de manière à initialiser et à contrôler la lecture des canaux audio sélectionnés et l'utilisation des données graphiques.

2. Système interactif de production de programme selon la revendication 1, dans lequel lesdits moyens de combiner sont agencés de manière à incorporer des segments audio dans ledit signal vidéo.

3. Système interactif de production de programme selon la revendication 1 ou la revendication 2 comprenant en outre des moyens (118) permettant de produire des canaux audio pour la transmission séparée dudit signal composite interactif unique, lesdits codes incorporés dans le signal vidéo étant agencés pour initialiser et contrôler la lecture de canaux audio transmis séparément.

4. Système interactif de production de programme selon l'une quelconque des revendications précédentes, dans lequel les données graphiques incorporées dans le signal vidéo comprennent des messages graphiques agencés de manière à pouvoir être surimposés sur la vidéo sous l'initialisation et le contrôle des codes incorporés des données de contrôle.

5. Système interactif de production de programme selon l'une quelconque des revendications précédentes, dans lequel les données graphiques incorporées dans le signal vidéo sont agencées pour permettre la génération de graphiques pour affichage selon des moyens de mise en oeuvre utilisant des synthétiseurs d'écriture (624).

6. Système interactif de production de programme selon l'une quelconque des revendications précédentes, dans lequel lesdits codes incorporés dans le signal vidéo identifient des points critiques du programme interactif auxquels des réponses à des sélections d'utilisateurs peuvent avoir lieu.

7. Système interactif de production de programme selon la revendication 6, dans lequel lesdits codes incorporés dans le signal vidéo comprennent un en-tête identifiant l'occurrence d'un point critique, un code d'identification de fonction spécifiant si le message à initialiser est de nature audio ou graphique, ainsi qu'un message d'interrogation correspondant audio ou graphique à émettre ou à afficher.

8. Système interactif de production de programme selon l'une quelconque des revendications précédentes, comprenant en outre :
des moyens d'encoder numériquement le signal vidéo conventionnel et
la pluralité des canaux audio ; ainsi que
des moyens de multiplexer le contrôle et les données graphiques, la pluralité des canaux audio et le signal vidéo conventionnel dans un unique signal composite interactif numérique.

9. Système interactif de production de programme selon l'une quelconque des revendications 1 à 7, dans lequel le signal vidéo conventionnel, les données graphiques et de contrôle, et la pluralité des canaux audio sont analogiques et les moyens de combiner (132, 214) comprennent des moyens d'incorporer les données graphiques et de contrôle, la pluralité des canaux audio et le signal vidéo conventionnel en un signal vidéo standard NTSC.

10. Système interactif de production de programme selon la revendication 9, dans lequel le signal vidéo conventionnel comprend un intervalle de trame et les moyens d'incorporation comprennent des moyens d'insérer les graphiques et données de contrôle et la pluralité des canaux audio dans l'intervalle de trame.

11. Système interactif de production de programme selon l'une quelconque des revendications précédentes, dans lequel les moyens (118) de fournir une pluralité de canaux audio comprennent des moyens de relier une séquence de segments de réponses audio dans chaque canal formant un vecteur de segments audio empilés de telle sorte que la quantité sélectionnable de segments de réponses audio soit supérieure à la quantité de la pluralité des canaux audio.

12. Système interactif de production de programme selon l'une quelconque des revendications précédentes, comprenant en outre des moyens d'enregistrer le signal interactif composite pour une transmission en différé.

13. Système interactif (600) pour recevoir un signal interactif composite qui comprend à la fois le programme conventionnel de télévision et un programme pleinement interactif, dans lequel le signal composite interactif comprend au moins un signal vidéo conventionnel comprenant de l'audio standard et la vidéo standard combinés avec des données graphiques et des données de contrôle, et une pluralité de canaux audio, lesdites données de contrôle incluant des codes qui sont incorporés dans le signal de vidéo, et dans lequel le système interactif (600) comprend :
des moyens pour recevoir le signal composite interactif ;
des moyens (616, 174 ; 617, 175 ; 616,175) pour extraire les données graphiques et les données de contrôle à partir du signal vidéo ;
des moyens de démodulation (616) pour démoduler l'audio et la vidéo standards, et des moyens de modulation (622) pour appliquer la vidéo à un écran et l'audio à une sortie audio ;
des moyens de traitement (178) couplés aux moyens d'extraction (616,174 ; 617,175 ; 616,175) et réactifs aux données de contrôle extraites, et
un interrupteur audio (620) contrôlable par lesdits moyens de traitement (178),
dans lequel lesdits moyens de traitement (178) sont agencés pour identifier lesdites données de contrôle extraites comme instructions pour la lecture d'une canal audio sélectionné ou l'utilisation des données graphiques et sont agencés soit pour diriger une canal audio sélectionné vers l'interrupteur audio (620) pour application à la sortie audio, soit pour entraîner l'utilisation des données graphiques à l'initialisation des codes desdites données de contrôle.

14. Système interactif (600) pour recevoir un signal composite interactif selon la revendication 13, dans lequel, une pluralité de canaux audio sont combinés avec le signal vidéo conventionnel et avec les données graphiques et données de contrôle, ledit moyen d'extraction (616,174) est agencé pour également extraire les canaux audio à partir du signal vidéo.

15. Système interactif (600) pour recevoir un signal composite interactif selon l'une quelconque des revendications 13 ou 14, comprenant en outre une mémoire (702) pour l'enregistrement d'une pluralité de canaux audio, ladite mémoire (702) étant contrôlable par lesdits moyens de traitement (178) de telle sorte qu'un canal audio enregistré dans ladite mémoire (702) puisse être sélectionné pour lecture par ledit moyen de traitement (178) en réponse à des données de contrôle extraites.

16. Système interactif (600) pour recevoir un signal composite interactif selon l'une quelconque des revendications 13 à 15, comprenant en outre un synthétiseur d'écriture (624) contrôlable par lesdits moyens de traitement (178) et agencé, dès réception des instructions par lesdits moyens de traitement pour générer des graphiques déterminés par les données graphiques extraites, et dans lequel ledit synthétiseur d'écriture (624) envoie le générateur de graphiques vers lesdits moyens de modulation (622) pour affichage par ledit écran surimposant ladite vidéo.

17. Système interactif (600) pour recevoir un signal composite interactif selon l'une quelconque des revendications 13 à 16, comprenant en outre une interface d'abonné (604, 628) agencée pour communiquer avec lesdits moyens de traitement (178) pour fournir les entrées d'un abonné, et dans lequel lesdits moyens de traitement (178) sélectionnent des données graphiques à utiliser, ou un canal audio à écouter, en réponse à une entrée d'abonné, et initialise la lecture du canal audio ou l'utilisation des données graphiques à un moment déterminé par les codes des données de contrôle.

18. Système interactif (600) pour recevoir un signal composite interactif selon l'une quelconque des revendications 13 à 17, comprenant en outre des moyens d'enregistrement (284) pour enregistrer les données graphiques et les données de contrôle extraites du signal vidéo, dans lequel les données de contrôle enregistrées incluent des codes de dérivation et les données graphiques enregistrées incluent des messages d'interrogation ou des codes pointant sur des messages d'interrogation.

19. Système interactif (600) pour recevoir un signal composite interactif selon la revendication 18 jointe à la revendication 17, dans lequel les entrées de l'abonné sont enregistrées dans lesdits moyens d'enregistrement (284) et lesdits moyens de traitement (178) sont agencés de manière à sélectionner des données graphiques à utiliser ou un canal audio à écouter à un moment déterminé par les codes des données de contrôle et en réponse à la fois à l'entrée d'un abonné courant et à des entrées enregistrées d'abonné.

20. Procédé pour recevoir un signal composite interactif pour affichage en tant que programme de télévision avec interactivité ; dans lequel le signal composite interactif comprend à la fois un programme de télévision conventionnel et un programme pleinement interactif, et comprend au moins un signal vidéo conventionnel comprenant de l'audio standard et de la vidéo standard combinés avec des données graphiques et des données de contrôle, et une pluralité de canaux audio, lesdites données de contrôle incluant des codes qui sont incorporés dans le signal vidéo, le procédé comprenant les étapes consistant à :
recevoir le signal composite interactif ;
extraire les données graphiques et les données de contrôle à partir du signal vidéo ;
démoduler les standards audio et vidéo, et diriger la vidéo vers un écran et l'audio vers une sortie audio ;
identifier les données de contrôle extraites comme instructions pour la lecture d'un canal sélectionné de la pluralité des canaux audio ou pour l'utilisation des données graphiques, et diriger le canal audio sélectionné vers la sortie audio ou utiliser les données graphiques à un moment déterminé par les codes desdites données de contrôle.

21. Procédé pour recevoir un signal composite interactif selon la revendication 20, où une pluralité de canaux audio sont combinés avec le signal vidéo conventionnel, et comprenant en outre l'extraction de la pluralité des canaux audio du signal vidéo.

22. Procédé pour recevoir un signal composite interactif selon la revendication 20 ou 21, comprenant en outre l'utilisation de données graphiques pour générer des graphiques et l'application des graphiques générés audit écran pour surimposer la vidéo projetée.

23. Procédé pour recevoir un signal composite interactif selon l'une quelconque des revendications 20 à 22, comprenant en outre la réception des entrées de l'abonné et la sélection du canal audio à écouter ou des données graphiques à utiliser en réponse à ladite entrée de l'abonné.

24. Procédé pour recevoir un signal composite interactif selon l'une quelconque des revendications 20 à 23, comprenant en outre l'enregistrement des données graphiques et des données de contrôle extraites à partir du signal de vidéo, les données de contrôle enregistrées incluant des codes de dérivation, et les données graphiques enregistrées incluant des messages d'interrogation ou des codes pointant sur des messages d'interrogation.
